# EUROPÄISCHE PATENTANMELDUNG

(11) **EP 4 309 979 A1**
(43) Veröffentlichungstag der Anmeldung: **24.01.2024**
(21) Anmeldenummer: 22185970.5
(22) Anmeldetag: 20.07.2022
(51) Int. Cl.: B62D 33/04

(54) **KOFFERAUFBAU MIT EINEM WANDECKPROFIL UND EINEM BODENECKPROFIL UND/ODER DACHECKPROFIL UND VERFAHREN ZUR HERSTELLUNG EINES KOFFERAUFBAUS**

(71) Anmelder: Schmitz Cargobull AG, 48341 Altenberge (DE)
(72) Erfinder: Beelmann, Reinhard, 45721 Haltern am See (DE)
(74) Vertreter: Cohausz & Florack

(57) **Zusammenfassung**

Beschrieben und dargestellt ist ein Kofferaufbau (1) eines Nutzfahrzeugs (N) mit wenigstens einer Wand (2,4), einem Dach (6) und einer Bodenstruktur (19), wobei ein Wandpaneel (3,5) und ein Dachpaneel (7) jeweils eine innere Decklage (15), eine äußere Decklage (13) und eine zwischen der inneren Decklage (15) und der äußeren Decklage (13) angeordnete Kernlage (16) aus Kunststoff aufweisen, wobei das Bodenpaneel (20) eine einen Ladeboden (22) bereitstellende Oberbodenlage (21), eine Unterbodenlage (25) und eine wenigstens teilweise aus Kunststoff gebildete Bodenlage (26) zwischen der Oberbodenlage (21) und der Unterbodenlage (25) aufweist, wobei die Wand (2,4) am unteren Rand (17) und/oder am oberen Rand (55) wenigstens ein Wandeckprofil (10,11) aufweist, wobei die Bodenstruktur (19) am unteren Rand (27) der der Wand (2,4) zugeordneten Schmalseite (18) wenigstens Bodeneckprofil (28) und/oder das Dach (6) am oberen Rand (57) der der Wand (2,4) zugeordneten Schmalseite (56) wenigstens ein Dacheckprofil (58) aufweist und wobei das wenigstens eine Wandeckprofil (10,11) mit dem Bodeneckprofil (28) oder dem Dacheckprofil (58) wenigstens spritzwasserdicht verbunden ist. Damit die Fertigung mit geringerem Aufwand und kostengünstiger erfolgen kann, ist vorgesehen, dass das wenigstens eine Wandeckprofil (10,11) mit dem Bodeneckprofil (28) oder dem Dacheckprofil (58) verklebt und zudem kraftschlüssig verbunden, insbesondere verschraubt, vernagelt, vernietet und/oder vertackert, ist.

## Beschreibung

Die Erfindung betrifft einen Kofferaufbau eines Nutzfahrzeugs, insbesondere Lastkraftwagen, Anhänger oder Sattelauflieger, mit wenigstens einer ein Wandpaneel umfassenden Wand, einem ein Dachpaneel umfassenden Dach und einer ein Bodenpaneel umfassenden Bodenstruktur, wobei das Wandpaneel und das Dachpaneel jeweils eine strukturgebende, einem Laderaum des Kofferaufbaus zugeordnete innere Decklage, eine strukturgebende, der Umgebung des Kofferaufbaus zugeordnete äußere Decklage und eine zwischen der inneren Decklage und der äußeren Decklage angeordnete Kernlage aus Kunststoff aufweisen, wobei das Bodenpaneel eine einen Ladeboden bereitstellende Oberbodenlage, eine Unterbodenlage und eine wenigstens teilweise aus Kunststoff gebildete Bodenlage zwischen der Oberbodenlage und der Unterbodenlage aufweist, wobei die Wand am unteren Rand und/oder am oberen Rand wenigstens ein sich entlang des Rands erstreckendes Wandeckprofil aufweist, wobei die Bodenstruktur am unteren Rand der der Wand zugeordneten Schmalseite wenigstens ein sich entlang des Rands erstreckendes Bodeneckprofil und/oder das Dach am oberen Rand der der Wand zugeordneten Schmalseite wenigstens ein sich entlang des Rands erstreckendes Dacheckprofil aufweist und wobei das wenigstens eine Wandeckprofil mit dem Bodeneckprofil oder dem Dacheckprofil wenigstens spritzwasserdicht verbunden ist. Zudem betrifft die Erfindung ein Verfahren zur Herstellung eines solchen Kofferaufbaus.

Nutzfahrzeuge sind in unterschiedlichen Ausgestaltungen, etwa in Form von Lastkraftwagen, Anhängern oder Sattelaufliegern, bekannt. Dabei sind die Nutzfahrzeuge unabhängig von ihrer Ausgestaltung insbesondere für den Transport von Gütern, also der zu transportierenden Ladung, überwiegend im öffentlichen Straßenverkehr vorgesehen. Zu diesem Zweck weisen die bekannten Nutzfahrzeuge typischerweise ein Chassis, ein mit dem Chassis verbundenes Fahrwerk und einen von dem Chassis getragenen Aufbau auf, welcher einen Laderaum bereitstellt zur Aufnahme der zu transportierenden Ladung. So sind beispielsweise Planenaufbauten bekannt, die wenigstens eine Plane zum Verschließen wenigstens einer Seite und/oder eines Dachs des Planenaufbaus aufweisen. Wenn eine Plane entlang einer Seitenwand verschoben werden kann, spricht man auch von sogenannten Curtainsidern.

Im Gegensatz zu Planenaufbauten sind bei sogenannten Kofferaufbauten die Seitenwände und das Dach ebenso wie die Stirnwand durch feste Wände verschlossen. Die Rückwand wird regelmäßig im Wesentlichen durch zwei Rückwandtüren gebildet, um den Laderaum bedarfsweise von hinten zu beladen. Bei Kofferaufbauten sind die Seitenwände, das Dach, die Stirnwand und die Rückwandtüren typischerweise im Wesentlichen aus Seitenwandpaneelen, einem Dachpaneel, einem Stirnwandpaneel und Türpaneelen gebildet. Die Paneele weisen dabei bedarfsweise zwei strukturgebende Decklagen insbesondere zur Aussteifung der Paneele auf, zwischen denen eine Kernlage aus Kunststoff vorgesehen ist. Die entsprechenden Decklagen sind entweder der Umgebung des Kofferaufbaus oder dem Laderaum zugeordnet. Die Decklagen weisen also vereinfacht gesprochen nach innen oder nach außen.

Die Bodenstruktur von Kofferaufbauten ist häufig im Wesentlichen durch ein Bodenpaneel gebildet, das eine Oberbodenlage umfasst, die einen Ladeboden zum Aufstellen der zu transportierenden Ladung bereitstellt. Gegenüberliegend zur Oberbodenlage weist das Bodenpaneel eine Unterbodenlage auf. Zwischen der Oberbodenlage und der Unterbodenlage ist eine Bodenlage vorgesehen, die wenigstens teilweise aus Kunststoff gebildet ist. Dabei schützen die Oberbodenlage und die Unterbodenlage den typischerweise geschäumten Kunststoff der Bodenlage vor dem Eindringen von Feuchtigkeit und/oder vor mechanischen Beschädigungen.

Kofferaufbauten können die Ladung im Laderaum gut gegen Feuchtigkeit schützen, weshalb Kofferaufbauten für den Transport von feuchtigkeitsempfindlichen Gütern zum Einsatz kommen, was häufig auch als Trockentransport bezeichnet wird. Da die Kernlagen aus Kunststoff eine hohe thermische Isolation bereitstellen können, werden Kofferaufbauten auch als sogenannte Kühlkofferaufbauten zum Transport von temperaturempfindlichen Gütern, also beispielsweise den sogenannten Kühltransport, verwendet. Um den Laderaum aktiv temperieren, beispielsweise kühlen, zu können, weisen Kühlkofferaufbauten häufig eine sogenannte Transportkältemaschine auf, die temperierte Luft, beispielsweise Kühlluft, erzeugt und in den Laderaum hineinbläst. Parallel dazu saugt die Transportkältemaschine Luft aus dem Laderaum an, um die Luft zu temperieren, beispielsweise abzukühlen, und als temperierte Luft zurück in den Laderaum zu blasen.

Unabhängig von einer Ausbildung als Kühlkofferaufbau weisen die Seitenwände und die Stirnwand von Kofferaufbauten am unteren und oberen Rand häufig jeweils ein sich entlang des entsprechenden Rands erstreckendes Wandeckprofil auf, um die Wände gegenüber einem Eindringen von Feuchtigkeit zu schützen. Zu prinzipiell demselben Zweck ist an den unteren Rändern der den Wänden zugeordneten Schmalseiten der Bodenstruktur häufig jeweils ein Bodeneckprofil vorgesehen, das sich entlang des entsprechenden Rands erstreckt. Ebenso weist das Dach an den oberen Rändern der den Wänden zugeordneten Schmalseiten häufig jeweils ein sich entlang des entsprechenden Rands erstreckendes Dacheckprofil auf. Um dabei zwischen den Eckprofilen der Wände einerseits und den Eckprofilen der Bodenstruktur und des Dachs andererseits spritzwasserdichte Verbindungen herzustellen, werden die einander zugeordneten Eckprofile bei den bekannten Kofferaufbauten miteinander verfalzt. Die Fertigung der Falzverbindungen zwischen den Eckprofilen ist jedoch zeitintensiv und führt mithin zu recht hohen Fertigungskosten.

Daher liegt der vorliegenden Erfindung die Aufgabe zugrunde, den Kofferaufbau und das Verfahren jeweils der eingangs genannten und zuvor näher erläuterten Art derart auszugestalten und weiterzubilden, dass die Fertigung des Kofferaufbaus mit geringerem Aufwand und kostengünstiger erfolgen kann.

Diese Aufgabe ist bei einem Kofferaufbau nach dem Oberbegriff von Anspruch 1 dadurch gelöst, dass das wenigstens eine Wandeckprofil mit dem Bodeneckprofil oder dem Dacheckprofil verklebt und zudem kraftschlüssig verbunden, insbesondere verschraubt, vernagelt, vernietet und/oder vertackert, ist.

Die genannte Aufgabe ist ferner gemäß Anspruch 14 gelöst durch ein Verfahren zur Herstellung eines Kofferaufbaus nach einem der Ansprüche 1 bis 13,
- bei dem das wenigstens eine Wandeckprofil mit dem Bodeneckprofil oder dem Dacheckprofil verklebt und zudem kraftschlüssig verbunden, insbesondere verschraubt, vernagelt, vernietet und/oder vertackert, wird und
- bei dem das Aushärten des Klebstoffs der wenigstens einen Klebeverbindung zwischen den Eckprofilen wenigstens teilweise bei gefügter kraftschlüssiger Verbindung zwischen den zu verklebenden Eckprofilen erfolgt.

Indem das wenigstens eine Wandeckprofil mit dem Bodeneckprofil oder dem Dacheckprofil verklebt wird, kann in einfacher Weise eine wenigstens spritzwasserdichte, vorzugsweise wenigstens im Wesentlichen feuchtigkeitsdichte, Verbindung zwischen den Eckprofilen hergestellt werden. Durch die zusätzliche kraftschlüssige Verbindung des wenigstens einen Wandeckprofils mit dem Bodeneckprofil oder dem Dacheckprofil können die Eckprofile einfach und schnell während des Aushärtens des Klebstoffs in der jeweils vorgesehenen Lage fixiert werden. So kann sicher verhindert werden, dass es während des Aushärtens des Klebstoffs zu einer Trennung der zu verklebenden Eckprofile kommt. Auf zusätzliche Montagehilfen zum temporären Fixieren der Eckprofile, welche nach dem Aushärten des Klebstoffs wieder entfernt werden müssen und den weiteren Fertigungsprozess stören oder gar aufhalten können, kann somit verzichtet werden. Stattdessen kann die wenigstens eine kraftschlüssige Verbindung des wenigstens einen Wandeckprofils mit dem Bodeneckprofil oder dem Dacheckprofil in einfacher Weise auch nach dem Aushärten des Klebstoffs und insbesondere auch nach der Fertigstellung des Kofferaufbaus bestehen bleiben. Das wenigstens eine Wandeckprofil kann mit dem Bodeneckprofil oder dem Dacheckprofil also insbesondere dauerhaft kraftschlüssig verbunden sein.

Die kraftschlüssige Verbindung muss dabei nicht so ausgebildet sein, dass dadurch die angestrebte Dichtigkeit zwischen den Eckprofilen sowie eine langlebige und stabile Verbindung zwischen den Eckprofilen erreicht werden. Dies kann insbesondere durch die Klebeverbindung erreicht werden. Die kraftschlüssige Verbindung kann dagegen insbesondere die zuverlässige Herstellung der Klebeverbindung sicherstellen. Vor diesem Hintergrund kann es ausreichen, wenn das wenigstens eine Wandeckprofil mit dem Bodeneckprofil oder dem Dacheckprofil entlang der Wand mehrfach kraftschlüssig verbunden ist. Dann müssen die Eckprofile also insbesondere nicht durchgängig kraftschlüssig miteinander verbunden werden. Alternativ oder zusätzlich kann es grundsätzlich auch ausreichen, die Eckprofile mehrfach entlang der Wand zu verkleben. Eine besonders hohe Dichtigkeit sowie Langlebigkeit und Stabilität wird jedoch erreicht, wenn das wenigstens eine Wandeckprofil entlang der Wand durchgängig mit dem Bodeneckprofil oder dem Dacheckprofil verklebt ist. Unabhängig von einer durchgängigen oder mehrfachen Ausbildung der Verbindungen kann es zweckmäßig sein, wenn das wenigstens eine Wandeckprofil mit dem Bodeneckprofil oder dem Dacheckprofil wenigstens im Wesentlichen über die gesamte Länge des Wandeckprofils und/oder des Bodeneckprofils oder Dacheckprofils verklebt und/oder kraftschlüssig verbunden ist.

Unter der Formulierung, wonach das wenigstens eine Wandeckprofil mit dem Bodeneckprofil oder dem Dacheckprofil verbunden bzw. verklebt ist, wird insbesondere verstanden, dass das am unteren Rand der Wand angeordnete Wandeckprofil mit dem Bodeneckprofil und/oder das am oberen Rand der Wand angeordnete Wandeckprofil mit dem Dacheckprofil verbunden bzw. verklebt ist. Wenn sowohl am oberen als auch am unteren Rand der Wand ein Wandeckprofil vorgesehen ist, kann also das am unteren Rand der Wand angeordnete Wandeckprofil mit dem Bodeneckprofil und das am oberen Rand der Wand angeordnete Wandeckprofil mit dem Dacheckprofil verklebt und zudem kraftschlüssig verbunden sein.

Die Herstellung der wenigstens einen Klebeverbindung zwischen den Eckprofilen kann besonders einfach und zudem zuverlässig sichergestellt werden, wenn das Aushärten des Klebstoffs der Klebeverbindung nicht nur teilweise, sondern wenigstens überwiegend, vorzugsweise wenigstens im Wesentlichen, bei gefügter kraftschlüssiger Verbindung zwischen den entsprechenden Eckprofilen erfolgt. Dann kann also die kraftschlüssige Verbindung kurz nach oder im Wesentlichen mit dem Fügen der Klebeverbindung gefügt werden.

Die kraftschlüssige Verbindung zwischen den Eckprofilen kann besonders einfach und schnell hergestellt werden, wenn das wenigstens eine Wandeckprofil mit dem Bodeneckprofil oder dem Dacheckprofil, insbesondere mittels selbstschneidenden Schrauben, verschraubt, vernagelt, vernietet und/oder vertackert ist. Dabei ermöglicht Verschrauben einen hohen Fixierdruck. Verschrauben mittels selbstschneidenden Schrauben und insbesondere Vernageln und Vertackern kann besonders schnell sein. Vernieten kann sich im Hinblick auf eine zuverlässige Verbindung bei geringem Bauraum anbieten. Unabhängig von der Art der kraftschlüssigen Verbindung kann es sich hinsichtlich einer einfachen und schnellen Herstellung auch anbieten, wenn das wenigstens eine Wandeckprofil von einer Außenseite des Kofferaufbaus kraftschlüssig mit dem Bodeneckprofil oder dem Dacheckprofil verbunden ist. Dabei wird eine besonders einfache und schnelle Herstellung ermöglicht, wenn das Fügen der kraftschlüssigen Verbindung, insbesondere ausschließlich, von einer der Umgebung des Kofferaufbaus zugeordneten Außenseite des Wandeckprofils erfolgt.

Bei der wenigstens einen Wand kann es sich insbesondere um eine Stirnwand und/oder eine Seitenwand des Kofferaufbaus handeln. Bei diesen Wänden kommen die fertigungstechnischen Vorteile besonders zum Tragen. Unabhängig davon kann die Wand zweckmäßigerweise als feste Wand ausgebildet sein.

Die innere und/oder äußere Decklage des Wandpaneels und/oder des Dachpaneels und/oder die Oberbodenlage und/oder die Unterbodenlage des Bodenpaneels kann bedarfsweise mehrlagig ausgebildet sein. Alternativ oder zusätzlich kann die innere und/oder äußere Decklage des Wandpaneels und/oder des Dachpaneels, die Oberbodenlage und/oder die Unterbodenlage wenigstens eine Schicht aus Metall und/oder faserverstärktem Kunststoff aufweisen. So kann bei geringem Gewicht eine hohe Steifigkeit erreicht werden. Beispielsweise kann die entsprechende Schicht einfach und kostengünstig aus Stahlblech gebildet sein. Unabhängig vom Material kann die Unterbodenlage das Bodenpaneel, insbesondere die Bodenstruktur, nach unten abschließen. Dann kann die Unterbodenlage dazu dienen, den Kofferaufbau auf ein Chassis und/oder Fahrwerk aufzusetzen.

Der Kunststoff der Kernlage des Wandpaneels, der Kernlage des Dachpaneels und/oder der Bodenlage des Bodenpaneels kann ein geschäumter und/oder extrudierter Kunststoff sein. Dies kann sich hinsichtlich einer guten thermischen Isolierung des Kofferaufbaus anbieten. Unabhängig davon kann die Bodenlage eine Mehrzahl von Bodenquerträgern zur Aussteifung der Bodenstruktur aufweisen. Dann kann der Kunststoff zwischen den Bodenquerträgern vorgesehen sein. Unabhängig davon kann es sich bei den Bodenquerträger wegen der geringen Wärmeleitfähigkeit um solche aus Holz handeln.

Um den Kofferaufbau über die gesamte Länge der Wand gegen Feuchtigkeitseintritt zu schützen, kann sich das wenigstens eine Wandeckprofil, das Bodeneckprofil und/oder das Dacheckprofil wenigstens im Wesentlichen über die gesamte Länge der Wand erstrecken. Dann können sich beispielsweise mehrere Profilelemente eines der Eckprofile gemeinsam über die gesamte Länge der Wand erstrecken. Besonders einfach und zuverlässig ist es jedoch, wenn sich ein Profilelement des wenigstens einen Wandeckprofils, des Bodeneckprofils und/oder des Dacheckprofils wenigstens im Wesentlichen über die gesamte Länge der Wand erstreckt. Unabhängig von der Längserstreckung der Eckprofile kann beispielsweise das wenigstens eine Wandeckprofil durch das Wandpaneel, das Bodeneckprofil durch das Bodenpaneel und/oder das Dacheckprofil durch das Dachpaneel gebildet sein. Hinsichtlich einer einfachen Fertigung bietet es sich jedoch an, wenn das wenigstens eine Wandeckprofil mit dem Wandpaneel, das Bodeneckprofil mit dem Bodenpaneel und/oder das Dacheckprofil mit dem Dachpaneel verbunden ist.

Gemäß einer ersten besonders bevorzugten Ausgestaltung des Kofferaufbaus ist das wenigstens eine Wandeckprofil mit dem Bodeneckprofil oder dem Dacheckprofil über eine Mehrzahl von entlang der Wand verteilt angeordneten Verbindungsmitteln kraftschlüssig verbunden. So kann einfach und schnell eine zuverlässige kraftschlüssige Verbindung zwischen den Eckprofilen hergestellt werden, die die Eckprofile bis zum Aushärten des Klebstoffs hinreichend fixiert. Dabei können die Verbindungsmittel zweckmäßig wenigstens im Wesentlichen gleichmäßig entlang der Wand verteilt sein. Dann können also die Abstände zwischen den Verbindungsmitteln wenigstens im Wesentlichen gleich groß sein. Zwingend erforderlich ist eine gleichmäßige Verteilung der Verbindungsmittel jedoch nicht. Unabhängig davon kann es sich hinsichtlich einer zuverlässigen Fixierung der Eckprofile über die gesamte Wandlänge anbieten, wenn die Verbindungsmittel wenigstens im Wesentlichen über die gesamte Länge der Wand verteilt angeordnet sind.

Die Verbindungsmittel können einfach und zweckmäßig als Schrauben, Nägel, Niete und/oder Klammern ausgebildet sein. Dabei können sich selbstschneidende Schrauben, Nägel und Klammern, insbesondere Tackerklammern, hinsichtlich einer schnellen und einfachen Fertigung besonders anbieten. Schrauben ermöglichen zudem hohe Fixierkräfte. Niete können sich im Hinblick auf eine zuverlässige Verbindung bei geringem Bauraum anbieten. Unabhängig von der Art der Verbindungsmittel kann es sich hinsichtlich einer einfach und schnell zu fügenden sowie zuverlässigen kraftschlüssigen Verbindung anbieten, wenn die Verbindungsmittel das Wandeckprofil und/oder das Bodeneckprofil oder Dacheckprofil durchgreifen. Dann können die Verbindungsmittel also jeweils das am unteren Rand der Wand angeordnete Wandeckprofil und/oder das Bodeneckprofil durchgreifen oder das am oberen Rand der Wand angeordnete Wandeckprofil und/oder das Dacheckprofil durchgreifen. Unabhängig davon können die Verbindungsmittel das Wandeckprofil und/oder das Bodeneckprofil oder Dacheckprofil im Bereich der Klebeverbindung zwischen den Eckprofilen durchgreifen. So kann in einfacher Weise eine zuverlässige Herstellung der Klebeverbindung sichergestellt werden. Alternativ oder zusätzlich zu einem Durchgreifen der Eckprofile, können die Verbindungsmittel kraftschlüssig in das Wandeckprofil und/oder das Bodeneckprofil oder Dacheckprofil eingreifen. Dann kann also zwischen den Verbindungsmitteln einerseits und dem Wandeckprofil und/oder dem Bodeneckprofil oder Dacheckprofil andererseits ein Kraftschluss bestehen. Dies kann ebenfalls zu einer einfachen und schnellen Herstellung der kraftschlüssigen Verbindung beitragen.

Besonders einfach und schnell und zudem zuverlässig können die Eckprofile mittels der Verbindungsmittel verbunden werden, wenn die Verbindungsmittel kraftschlüssig in wenigstens ein sich entlang der Wand erstreckendes Montageelement eingreifen. In ein entsprechendes Montageelement können die Verbindungsmittel einfach und schnell eingebracht werden. Dann kann nämlich bedarfsweise ein exaktes Positionieren der Verbindungsmittel entfallen. Unabhängig davon kann es nicht nur fertigungstechnisch, sondern auch konstruktiv einfach sein, wenn mehrere der Verbindungsmittel, vorzugsweise alle, insbesondere demselben Wandeckprofil zugeordneten, Verbindungsmittel, in ein gemeinsames Montageelement eingreifen. Alternativ oder zusätzlich kann sich das wenigstens eine Montageelement zweckmäßigerweise wenigstens im Wesentlichen über die gesamte Länge der Wand erstrecken. Dann können sich grundsätzlich mehrere Montageelemente gemeinsam über die gesamte Länge der Wand erstrecken. Konstruktiv ist es jedoch bevorzugt, wenn sich das wenigstens eine Montageelement alleine wenigstens im Wesentlichen über die gesamte Länge der Wand erstreckt. Unabhängig von seiner Länge kann das wenigstens eine Montageelement konstruktiv einfach Teil der Bodenstruktur oder des Dachs sein. Dann kann also insbesondere das der Bodenstruktur zugeordnete Montageelement Teil der Bodenstruktur und/oder das dem Dach zugeordnete Montageelement Teil des Dachs sein.

Das wenigstens eine Montageelement kann einfach und zweckmäßig als Montageleiste ausgebildet sein. Alternativ oder zusätzlich kann das wenigstens eine Montageelement quer zur Wand einen wenigstens im Wesentlichen rechteckigen Querschnitt aufweisen. Rechteckige Querschnitte sind einfach zu fertigen und erlauben zudem eine konstruktiv einfache Integration des Montageelements in die Bodenstruktur, die Wand oder das Dach. Unabhängig von der Form des Montageelements kann das wenigstens eine Montageelement wenigstens im Wesentlichen aus Holz und/oder Kunststoff gebildet sein. Entsprechende Materialien ermöglichen ein einfaches und schnelles Einbringen der Verbindungsmittel in das Montageelement und können zugleich einen hinreichend hohen Auszugswiderstand bereitstellen. Zudem wirkt sich die Verwendung von Holz und/oder Kunststoff positiv auf die thermische Isolierung des Kofferaufbaus aus.

Nicht nur im Hinblick auf eine einfache Konstruktion, sondern auch hinsichtlich eines einfachen Einbringens der Verbindungsmittel in das Montageelement kann es sich anbieten, wenn das wenigstens eine Montageelement das Wandpaneel, insbesondere wenigstens im Wesentlichen über die gesamte Länge des Montageelements, wenigstens abschnittsweise untergreift oder übergreift. Dabei kann insbesondere das der Bodenstruktur zugeordnete Montageelement das Wandpaneel untergreifen und/oder das dem Dach zugeordnete Montageelement das Wandpaneel übergreifen. Unabhängig davon kann das Wandpaneel auf dem, insbesondere der Bodenstruktur zugeordneten, Montageelement aufstehen, sodass Kräfte vom Wandpaneel in das Montageelement eingeleitet werden können. Zu prinzipiell demselben Zweck kann alternativ oder zusätzlich das, insbesondere dem Dach zugeordnete, Montageelement auf dem Wandpaneel aufliegen. Die Fertigung des Kofferaufbaus kann jedoch einfacher und kostengünstiger gestaltet werden, wenn zwischen dem Wandpaneel und dem wenigstens einen Montageelement ein Toleranzausgleichsspalt vorgesehen ist. Damit dort keine Feuchtigkeit eindringen kann, bietet es sich weiter an, wenn der wenigstens eine Toleranzausgleichsspalt mit Klebstoff und/oder Kunststoff ausgefüllt ist. Dies dient dann gleichzeitig einer gewissen zusätzlichen thermischen Isolierung. Aus diesem Grund und hinsichtlich einer einfachen Fertigung kann zudem vorgesehen sein, dass der Klebstoff und/oder der Kunststoff geschäumt und/oder extrudiert ist. Unabhängig davon, ob der Toleranzausgleichspalt mit Kunststoff und/oder Klebstoff gefüllt ist, kann der wenigstens eine Toleranzausgleichsspalt quer zur Wand konstruktiv einfach einen wenigstens im Wesentlichen rechteckigen Querschnitt aufweisen.

Hinsichtlich einer konstruktiv einfachen Ausgestaltung des Kofferaufbaus bietet es sich an, wenn das wenigstens eine Montageelement gegenüber der Bodenstruktur und/oder gegenüber dem Dach in Richtung der Wand vorsteht. Wenn dabei das Montageelement Teil der Bodenstruktur oder des Dachs ist, kann das Montageelement gegenüber der übrigen Bodenstruktur oder gegenüber dem übrigen Dach entsprechend vorstehen. Alternativ oder zusätzlich zu einem Vorstehen gegenüber der Bodenstruktur und/oder dem Dach kann es zu einer kompakten Konstruktion beitragen, wenn sich das wenigstens eine Montageelement wenigstens im Wesentlichen von dem Bodenpaneel, insbesondere der Bodenalge des Bodenpaneels, oder dem Dachpaneel, insbesondere der Kernlage des Dachpaneels, bis wenigstens im Wesentlichen zum, insbesondere zugehörigen, Wandeckprofil erstreckt. Alternativ oder zusätzlich bietet es sich für einen stabilen Kofferaufbau an, wenn das wenigstens eine Montageelement mit dem Bodenpaneel, insbesondere der Bodenlage des Bodenpaneels, oder dem Dachpaneel, insbesondere der Kernlage des Dachpaneels, verbunden ist. Dabei kann das Verbinden fertigungstechnisch einfach und zugleich stabil durch Verkleben und/oder Verschrauben erfolgen, wobei sich Verkleben hinsichtlich einer einfachen Fertigung besonders anbieten kann.

Das Montageelement kann fertigungstechnisch und konstruktiv einfach in den Kofferaufbau, insbesondere die Bodenstruktur oder das Dach, integriert werden, wenn das Bodeneckprofil und/oder das Dacheckprofil das, insbesondere zugehörige, Montageelement wenigstens abschnittsweise untergreift oder übergreift. Insbesondere kann das Bodeneckprofil das der Bodenstruktur zugeordnete Montageelement untergreifen und/oder das Dacheckprofil das dem Dach zugeordnete Montageelement übergreifen. Dabei kann es sowohl konstruktiv als auch fertigungstechnisch besonders einfach sein, wenn das entsprechende Eckprofil das Montageelement nicht nur untergreift oder übergreift, sondern wenigstens abschnittsweise umgreift. Unabhängig davon ist es aus den genannten Gründen besonders bevorzugt, wenn das Bodeneckprofil und/oder das Dacheckprofil das Montageelement wenigstens im Wesentlichen über die gesamte Länge des Montageelements wenigstens abschnittsweise untergreift oder übergreift, insbesondere wenigstens abschnittsweise umgreift.

Um an dem wenigstens einen Wandeckprofil von einer Außenseite des Kofferaufbaus in einfacher Weise wenigstens ein Funktionselement montieren zu können, kann das wenigstens eine Wandeckprofil wenigstens eine sich in Längsrichtung des Wandeckprofils erstreckende Montagenut aufweisen. So kann das Wandeckprofil nicht nur der Anbindung der Wand an den Boden oder das Dach, sondern auch der Befestigung von Funktionselementen an dem Kofferaufbau dienen, was zu einer einfachen und kostengünstigen Ausgestaltung des Kofferaufbaus beiträgt. Dabei kann die wenigstens eine Montagenut zweckmäßigerweise nach außen, also insbesondere in Richtung der Umgebung des Kofferaufbaus, geöffnet sein. Unabhängig davon kann es sich im Hinblick auf eine flexible Anordnung des wenigstens einen Funktionselements anbieten, wenn sich die wenigstens eine Montagenut wenigstens im Wesentlichen über die gesamte Länge des Wandeckprofils erstreckt. Eine einfache und zuverlässig, insbesondere formschlüssige, Montage in der Montagenut kann alternativ oder zusätzlich ermöglicht werden, wenn sich die wenigstens eine Montagenut in Richtung einer Montagenutöffnung der Montagenut wenigstens abschnittsweise verjüngt.

Zur Herstellung der Verklebung des Wandeckprofils mit dem Bodeneckprofil oder dem Dacheckprofil kann wenigstens ein Nutgrund der wenigstens einen Montagenut mit dem Bodeneckprofil oder dem Dacheckprofil verklebt sein. Dies kann nicht nur konstruktiv einfach sein, sondern auch zu einer stabilen und zuverlässigen Klebeverbindung beitragen. Wenn sich die wenigstens eine Montagenut dabei wenigstens im Wesentlichen über die gesamte Länge des, insbesondere zugehörigen, Wandeckprofils erstreckt, kann das wenigstens eine Wandeckprofil auf diese Weise wenigstens im Wesentlichen über die gesamte Längserstreckung stabil und zuverlässig mit dem Bodeneckprofil oder dem Dacheckprofil verklebt sein. Grundsätzlich unabhängig von einer Verklebung des Nutgrunds der Montagenut mit dem Bodeneckprofil oder dem Dacheckprofil können die Verbindungsmittel den Nutgrund der, insbesondere zugehörigen, Montagenut durchgreifen. Dies kann sich ebenfalls hinsichtlich einer einfachen und darüber hinaus kompakten Konstruktion anbieten. Wenn der Nutgrund der Montagenut mit dem Bodeneckprofil oder dem Dacheckprofil verklebt ist, kann mittels der den Nutgrund durchgreifenden Verbindungsmittel zudem in einfacher Weise eine zuverlässige Herstellung der Klebeverbindung sichergestellt werden.

In der wenigstens einen Montagenut kann zweckmäßig wenigstens ein, beispielsweise elektrisches, Funktionselement gehalten sein. Dann kann das wenigstens eine Funktionselement in einfacher Weise formschlüssig in der Montagenut gehalten sein, beispielsweise indem das wenigstens eine Funktionselement wenigstens eine Hinterschneidung der Montagenut formschlüssig hintergreift. Grundsätzlich unabhängig davon kann die formschlüssige Verbindung besonders einfach gefügt werden, wenn das wenigstens eine Funktionselement in die Montagenut eingerastet ist. Alternativ oder zusätzlich zu einem Formschluss kann das wenigstens eine Funktionselement besonders zuverlässig, etwa auch um einem Diebstahl vorzubeugen, in der Montagenut verklebt sein.

Das wenigstens eine, insbesondere elektrische, Funktionselement kann wenigstens ein Konturmarkierungsleuchtmittel, wenigstens ein Umfeldbeleuchtungsleuchtmittel, wenigstens eine Kamera, wenigstens einen Sensor und/oder wenigstens ein LED-Band umfassen. Dabei kann das wenigstens eine, insbesondere gelbe, orangene und/oder rote, Konturmarkierungsleuchtmittel zur aktiven Markierung der äußeren Kontur des Kofferaufbaus ausgebildet sein. Dies kann zur besseren Erkennbarkeit des Umrisses des Kofferaufbaus betragen. Das wenigstens eine, insbesondere weiße, Umfeldbeleuchtungsleuchtmittel kann zur Ausleuchtung der Umgebung des Kofferaufbaus ausgebildet sein. So kann beispielsweise bei stehendem Nutzfahrzeug die Umgebung des Nutzfahrzeugs ausgeleuchtet werden. Die wenigstens eine Kamera kann zum Erfassen eines Bildes des Kofferaufbaus und/oder der Umgebung des Kofferaufbaus ausgebildet sein, beispielsweise um dem Fahrer die Rückwärtsfahrt zu erleichtern. Der wenigstens eine Sensor kann beispielsweise wenigstens einen Abstandssensor zum Erfassen eines Abstands des Kofferaufbaus zu einem von dem Kofferaufbau beabstandeten Objekt und/oder wenigstens einen Bewegungssensor zum Erfassen einer in der Umgebung des Kofferaufbaus stattfindenden Bewegung umfassen. Das wenigstens eine LED-Band kann eine Mehrzahl von in Längsrichtung des LED-Bands verteilt angeordneten LED-Leuchtmitteln umfassen, die an wenigstens einer bandförmigen, vorzugsweise flexiblen, Leiterplatte des LED-Bands angebracht und elektrisch mit der Leiterplatte verbunden sein können. Unabhängig davon können die LED-Leuchtmittel das wenigstens eine Konturmarkierungsleuchtmittel und/oder Umfeldbeleuchtungsleuchtmittel umfassen. Alternativ oder zusätzlich kann das wenigstens eine LED-Band die wenigstens eine Kamera und/oder den wenigstens einen Sensor umfassen. Dann kann die Kamera und/oder der Sensor in einfacher Weise an der wenigstens einen Leiterplatte des LED-Bands angebracht und mit der Leiterplatte elektrisch verbunden sein.

Unabhängig von der Art des Funktionselements kann das wenigstens eine Funktionselement wenigstens eine, insbesondere sich in Längsrichtung der Montagenut erstreckende, Aussparung für den in der Montagenut angeordneten Abschnitt wenigstens eines der Verbindungsmittel aufweisen. So wird eine flexible Anordnung des Funktionselements und/oder der Verbindungsmittel ermöglicht. Dann können ein oder mehrere der Verbindungsmittel, vorzugsweise alle, insbesondere dem entsprechenden Wandeckprofil zugeordneten, Verbindungsmittel, abschnittsweise in der Aussparung aufgenommen sein. Unabhängig davon kann die Aussparung zweckmäßig an der einem Nutgrund der Montagenut zugewandten Rückseite des Funktionselements angeordnet sein. Alternativ oder zusätzlich zu einer Aussparung kann das wenigstens eine Funktionselement den in der Montagenut angeordneten Abschnitt eines oder mehrerer der Verbindungsmittel, vorzugsweise aller, insbesondere dem entsprechenden Wandeckprofil zugeordneten, Verbindungsmittel, überdecken. So können die Verbindungsmittel und die entsprechenden Fügestellen durch das Funktionselement geschützt werden, beispielsweise vor Witterung.

Das Wandeckprofil, das Bodeneckprofil und/oder das Dacheckprofil kann wenigstens einen Klebstoffaufnahmeraum zur Aufnahme von überschüssigem Klebstoff der Klebeverbindung zwischen den Eckprofilen wenigstens abschnittsweise, insbesondere wenigstens im Wesentlichen, begrenzen. So kann beim Fügen der Klebeverbindung zwischen den Eckprofilen überschüssiger Klebstoff in dem Klebstoffaufnahmeraum aufgefangen werden, was zu einer sauberen und einfachen Fertigung beiträgt. Wenn der wenigstens eine Klebstoffaufnahmeraum wenigstens teilweise, vorzugsweise wenigstens im Wesentlichen, mit Klebstoff gefüllt ist, trägt dies zudem zu einer Aussteifung des entsprechenden Eckprofils bei. Unabhängig davon kann es aus konstruktiver Sicht vorteilhaft sein, wenn der wenigstens eine Klebstoffaufnahmeraum wenigstens im Wesentlichen durch das Wandeckprofil gebildet wird. Alternativ oder zusätzlich kann sich der wenigstens eine Klebstoffaufnahmeraum zweckmäßigerweise in Längsrichtung, insbesondere wenigstens im Wesentlichen über die gesamte Länge, des den Klebstoffaufnahmeraum wenigstens teilweise begrenzenden Eckprofils erstrecken. So kann über einen großen Abschnitt der Verklebung eine Klebstoffaufnahme ermöglicht werden. Unabhängig davon kann es zu einer zuverlässigen Klebstoffaufnahme beitragen, wenn der wenigstens eine Klebstoffaufnahmeraum im Wesentlichen geschlossen ist.

Wenn der wenigstens eine Klebstoffaufnahmeraum wenigstens teilweise durch das Wandeckprofil begrenzt ist, bietet es sich an, wenn der Klebstoffaufnahmeraum an die Montagenut des Wandeckprofils angrenzt. Dies ermöglicht eine kompakte Ausgestaltung des Wandeckprofils und kann zudem zu einer Verstärkung der Montagenut durch den in dem Klebstoffaufnahmeraum aufgenommenen Klebstoff beitragen. Vor diesem Hintergrund ist es besonders bevorzugt, wenn der wenigstens eine Klebstoffaufnahmeraum und die Montagenut wenigstens einen gemeinsamen Profilabschnitt des Wandeckprofils aufweisen. Unabhängig davon, ob der Klebstoffaufnahmeraum an die Montagenut angrenzt oder nicht, kann es auch zu einer kompakten Ausgestaltung des Wandeckprofils beitragen, wenn der wenigstens eine Klebstoffaufnahmeraum von einem sich in Längsrichtung des Wandeckprofils erstreckenden Randabschnitt des Wandeckprofils begrenzt wird.

Damit der überschüssige Klebstoff ungehindert in den Klebstoffaufnahmeraum gelangen kann, kann der wenigstens eine Klebstoffaufnahmeraum wenigstens eine Aufnahmeöffnung zum Einfließen von überschüssigem Klebstoff in den Klebstoffaufnahmeraum aufweisen. Dabei kann die wenigstens eine Aufnahmeöffnung zweckmäßigerweise der Klebeverbindung zwischen den, insbesondere dem Klebstoffaufnahmeraum zugeordneten, Eckprofilen zugewandt sein. Alternativ oder zusätzlich kann sich die wenigstens eine Aufnahmeöffnung in Längsrichtung des, insbesondere den Klebstoffaufnahmeraum wenigstens teilweise begrenzenden, Eckprofils erstrecken. So kann über einen großen Abschnitt der Verklebung ein ungehindertes Einfließen von Klebstoff in den Klebstoffaufnahmeraum ermöglicht werden. Dies gilt umso mehr, wenn sich die wenigstens eine Aufnahmeöffnung wenigstens im Wesentlichen über die gesamte Länge des entsprechenden Eckprofils erstreckt.

Um zu vermeiden, dass bei der Fertigung überschüssiger Klebstoff der Klebeverbindung zwischen den Eckprofilen zu einer Außenseite des Kofferaufbaus austritt, kann wenigstens ein Dichtelement vorgesehen sein, das zwischen dem wenigstens einen Wandeckprofil und dem Bodeneckprofil oder Dacheckprofil angeordnet sein kann. Dann kann also zwischen dem am unteren Rand der Wand angeordneten Wandeckprofil und dem Bodeneckprofil und/oder zwischen dem am oberen Rand der Wand angeordneten Wandeckprofil und dem Dacheckprofil ein Dichtelement vorgesehen sein. Auch dies trägt zu einer sauberen und einfachen Fertigung des Kofferaufbaus bei. Dabei kann das wenigstens eine Dichtelement in einfacher Weise als Dichtband ausgebildet sein. Unabhängig davon kann die wenigstens eine Aufnahmeöffnung des wenigstens einen Klebstoffaufnahmeraums zweckmäßigerweise zwischen dem Dichtelement und der Klebeverbindung zwischen den Eckprofilen angeordnet sein. So kann der überschüssige Klebstoff ungehindert in den Klebstoffaufnahmeraum gelangen.

Im Hinblick auf einen stabilen Kofferaufbau kann es sich anbieten, wenn die dem Laderaum zugeordnete Innenseite des Wandpaneels und die Bodenstruktur, insbesondere in einer Ebene wenigstens im Wesentlichen parallel zur Wand, verklebt sind. Dabei kann die Innenseite des Wandpaneels vorzugsweise durch die innere Decklage des Wandpaneels gebildet werden. Dies ermöglicht eine schmale Ausgestaltung des Wandpaneels. Alternativ oder zusätzlich kann die Innenseite des Wandpaneels mit der Bodenstruktur einerseits und das Wandeckprofil mit dem Bodeneckprofil andererseits in voneinander beabstandeten Klebeebenen verklebt sein. Dann können also die Verklebung zwischen der Innenseite des Wandpaneels und der Bodenstruktur und die Verklebung zwischen dem Wandeckprofil und dem Bodeneckprofil in voneinander beabstandeten Ebenen angeordnet sein. So wird eine besonders steife und stabile Ausgestaltung des Kofferaufbaus erreicht.

Im Hinblick auf eine einfache Fertigung der Wand bietet es sich an, wenn das wenigstens eine Wandeckprofil mit der der Umgebung des Kofferaufbaus zugeordneten Außenseite des Wandpaneels verbunden ist. Dabei kann die Außenseite des Wandpaneels zweckmäßigerweise durch die äußere Decklage des Wandpaneels gebildet sein. Alternativ oder zusätzlich kann es hinsichtlich einer einfachen Fertigung der Bodenstruktur vorteilhaft sein, wenn das Bodeneckprofil mit der der Umgebung des Kofferaufbaus zugeordneten Unterseite des Bodenpaneels verbunden ist. Die Unterseite des Bodenpaneels kann zweckmäßig durch die Unterbodenlage des Bodenpaneels gebildet werden. Unabhängig davon kann es zu einer einfachen Fertigung des Dachs beitragen, wenn das Dacheckprofil mit der der Umgebung des Kofferaufbaus zugeordneten Oberseite des Dachpaneels verbunden ist, wobei die Oberseite des Dachpaneels zweckmäßig durch die äußere Decklage des Dachpaneels gebildet sein kann. Eine zuverlässige Verbindung zwischen dem wenigstens einen Eckprofil und dem zugehörigen Paneel kann dabei erreicht werden, indem das Eckprofil mit dem Paneel verklebt und/oder verschraubt wird. Eine Verklebung ermöglicht dabei eine besonders einfache Fertigung und wirkt sich zudem positiv auf die thermische Isolierung aus.

Das wenigstens eine Wandeckprofil, das Bodeneckprofil und/oder das Dacheckprofil kann wenigstens im Wesentlichen aus Metall und/oder faserverstärktem Kunststoff gebildet sein. Entsprechende Werkstoffe ermöglichen eine hohe Steifigkeit der Eckprofile bei geringem Gewicht. Eckprofile aus Metall können zudem einfach herzustellen und mithin kostengünstig sein. Dabei bietet sich Stahl hinsichtlich einer hohen Steifigkeit bei geringem Gewicht besonders an. Dann kann das wenigstens eine Wandeckprofil, das Bodeneckprofil und/oder das Dacheckprofil einfach aus Stahlblech hergestellt sein.

Das Bodeneckprofil und/oder das Dacheckprofil kann konstruktiv einfach und zweckmäßig einen wenigstens im Wesentlichen L-förmigen Querschnitt quer zur Wand aufweisen. Dann kann einer der L-Schenkel des Bodeneckprofils und/oder des Dacheckprofils der Einfachheit halber dem Wandeckprofil zugeordnet sein. Insbesondere kann einer der L-Schenkel des Bodeneckprofils dem am unteren Rand der Wand angeordneten Wandeckprofil und/oder einer der L-Schenkel des Dacheckprofils dem am oberen Rand der Wand angeordneten Wandeckprofil zugeordnet sein. Alternativ oder zusätzlich kann aus demselben Grund einer der L-Schenkel des Bodeneckprofils dem Bodenpaneel und/oder einer der L-Schenkel des Dacheckprofils dem Dachpaneel zugeordnet sein. Dabei können die L-Schenkel des Bodeneckprofils und/oder des Dacheckprofils grundsätzlich einfach wenigstens im Wesentlichen gleich lang ausgebildet sein. Konstruktiv kann es jedoch vorteilhaft sein, wenn der dem Wandeckprofil zugeordnete L-Schenkel des Bodeneckprofils und/oder des Dacheckprofils ein kurzer L-Schenkel und/oder der dem Bodenpaneel zugeordnete L-Schenkel des Bodeneckprofils und/oder der dem Dachpaneel zugeordnete L-Schenkel des Dacheckprofils ein langer L-Schenkel ist.

Bei einer ersten besonders bevorzugten Ausgestaltung des Verfahrens wird das wenigstens eine Wandeckprofil, das mit dem Wandpaneel verbunden oder durch das Wandpaneel gebildet ist, mit dem Bodeneckprofil, das mit dem Bodenpaneel verbunden oder durch das Bodenpaneel gebildet ist, oder mit dem Dacheckprofil, das mit dem Dachpanel verbunden oder durch das Dachpaneel gebildet ist, verklebt und kraftschlüssig verbunden. Dies vereinfacht die Fertigung des Kofferaufbaus. Dann kann also zunächst das wenigstens eine Wandeckprofil mit dem Wandpaneel und das Bodeneckprofil mit dem Bodenpaneel und/oder das Dacheckprofil mit dem Dachpaneel verbunden werden und sodann das wenigstens eine Wandeckprofil mit dem Bodeneckprofil oder dem Dacheckprofil verbunden werden. Wenn eines oder beide der zu verbindenden Eckprofile durch das zugehörige Paneel, beispielsweise die äußere Decklage des zugehörigen Paneels, gebildet wird, kann das Verbinden des entsprechenden Eckprofils mit dem zugehörigen Paneel entfallen. Bevorzugt ist dies jedoch nicht. Unabhängig davon kann das Verbinden des wenigstens einen Wandeckprofils mit dem Wandpaneel, das Verbinden des Bodeneckprofils mit dem Bodenpaneel und/oder das Verbinden des Dacheckprofils mit dem Dachpaneel einfach durch Verkleben und/oder Verschrauben erfolgen.

Alternativ oder zusätzlich kann es auch zu einer einfachen Fertigung des Kofferaufbaus beitragen, wenn die Wand auf die Bodenstruktur aufgesetzt wird. Dann kann das Wandeckprofil mit dem Bodeneckprofil verklebt und kraftschlüssig verbunden werden, während die Wand auf der Bodenstruktur aufsitzt. Durch das Aufsetzen der Wand auf die Bodenstruktur können die beiden Bauteile einfach in eine definierte Position relativ zueinander gebracht werden, sodass ein präzises Fügen der Klebeverbindung und der kraftschlüssigen Verbindung zwischen den Eckprofilen vereinfacht wird. Unabhängig davon kann die Gewichtskraft der Wand, wenn die Wand auf die Bodenstruktur aufgesetzt ist, wenigstens teilweise, insbesondere wenigstens überwiegend auf der Bodenstruktur abgestützt sein. Alternativ oder zusätzlich kann die Wand mit einer Sockelscheuerleiste der Wand auf die Bodenstruktur aufgesetzt werden. Dies kann besonders einfach und zweckmäßig sein, da eine Sockelscheuerleiste ohnehin im Laderaum im Eckbereich zwischen dem Wandpaneel und der Bodenstruktur vorgesehen sein kann. Zudem können Sockelscheuerleisten von Kofferaufbauten hinreichend stabil ausgebildet sein, um darüber die Wand an der Bodenstruktur abzustützen. Insbesondere wenn die Wand mit der Sockelscheuerleiste auf die Bodenstruktur aufgesetzt wird, jedoch auch ganz grundsätzlich kann es ebenfalls einfach und zweckmäßig sein, die Wand auf den Ladeboden aufzusetzen.

Nachfolgend wird die Erfindung anhand einer lediglich Ausführungsbeispiele darstellenden Zeichnung näher erläutert. In der Zeichnung zeigt jeweils schematisch
- Fig. 1: ein von einer Zugmaschine gezogenes Nutzfahrzeug mit einem erfindungsgemäßen Kofferaufbau in einer perspektivischen Ansicht,
- Fig. 2: den Kofferaufbau aus Fig. 1 in einer Schnittansicht entlang der Schnittebene II-II aus Fig. 1,
- Fig. 3A: ein Detail des Kofferaufbaus aus Fig. 1 in einem Verbindungsbereich zwischen einer Seitenwand und einer Bodenstruktur des Kofferaufbaus in einer Schnittansicht entlang der Schnittebene II-II aus Fig. 1,
- Fig. 3B: ein Detail des Kofferaufbaus aus Fig. 1 in einem Verbindungsbereich zwischen einem Wandeckprofil der Seitenwand und einem Bodeneckprofil der Bodenstruktur in einer Schnittansicht entlang der Schnittebene II-II aus Fig. 1 und
- Fig. 4: ein Detail des Kofferaufbaus aus Fig. 1 in einem Verbindungsbereich zwischen der Seitenwand und einem Dach des Kofferaufbaus in einer Schnittansicht entlang der Schnittebene II-II aus Fig. 1.

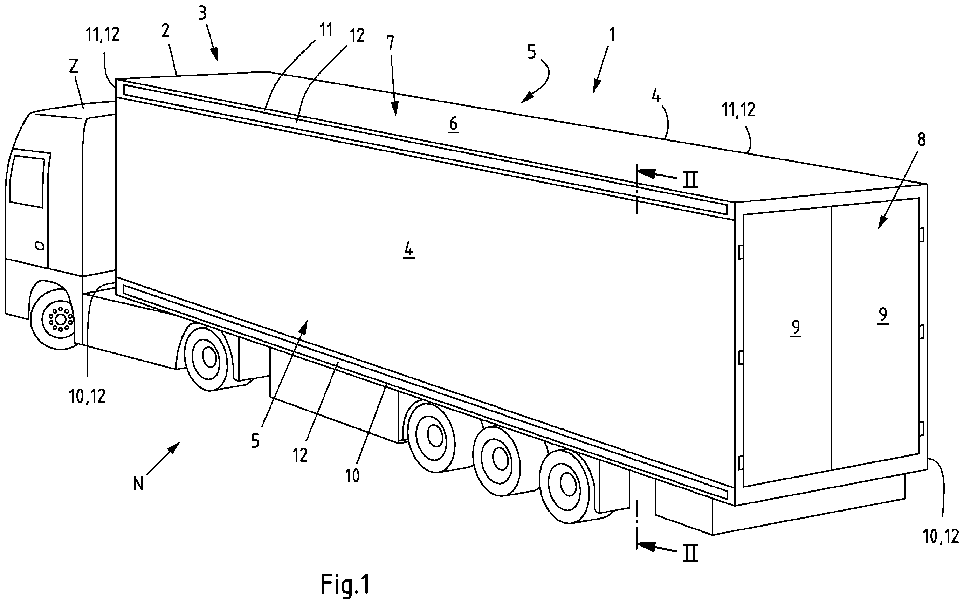

In der Fig. 1 ist ein von einer Zugmaschine Z gezogenes Nutzfahrzeug N in Form eines Sattelaufliegers in einer perspektivischen Ansicht dargestellt. Das Nutzfahrzeug N weist einen Kofferaufbau 1 auf. Der Kofferaufbau 1 umfasst eine Stirnwand 2 umfassend ein Stirnwandpaneel 3, zwei Seitenwände 4 jeweils umfassend ein Seitenwandpaneel 5 und ein Dach 6 umfassend ein Dachpaneel 7. An der Rückseite des Kofferaufbaus 1 ist eine Rückwand 8 vorgesehen, die vorliegend im Wesentlichen durch zwei Rückwandtüren 9 gebildet wird.

Die Seitenwände 4 und die Stirnwand 2 weisen an ihrem unteren und oberen Rand jeweils ein Wandeckprofil 10,11 auf, das sich wenigstens im Wesentlichen über die gesamte Länge der entsprechenden Wand 2,4 erstreckt. An den Wandeckprofilen 10,11 der Seitenwände 4 und der Stirnwand 2 ist von außerhalb des Kofferaufbaus 1 jeweils ein Funktionselement 12 befestigt, das sich in Längsrichtung des zugehörigen Wandeckprofils 10,11 über im Wesentlichen die gesamte Länge des Wandeckprofils 10,11 erstreckt.

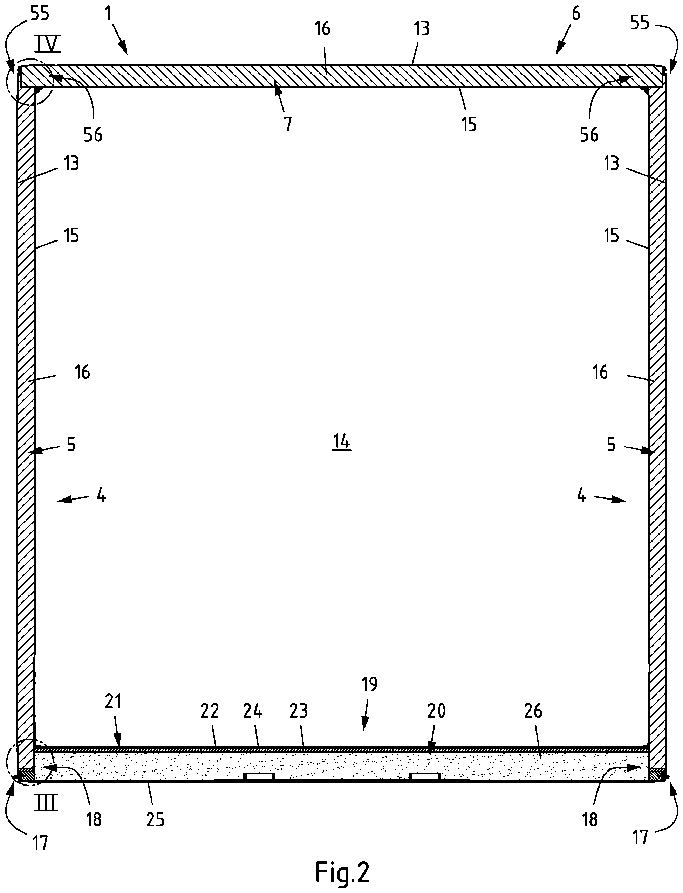

In der Fig. 2 ist der Kofferaufbau 1 in einem Querschnitt entlang der Schnittebene II-II aus Fig. 1 dargestellt. Die Seitenwandpaneele 5 der Seitenwände 4 und das Dachpaneel 7 des Dachs 6 weisen jeweils eine der Umgebung des Kofferaufbaus 1 zugeordnete strukturgebende äußere Decklage 13 auf, die wenigstens eine Schicht aus einem Metallwerkstoff oder faserverstärktem Kunststoff aufweist. Zudem weisen die Seitenwandpaneele 5 und das Dachpaneel 7 jeweils eine einem Laderaum 14 des Kofferaufbaus 1 zugeordnete strukturgebende innere Decklage 15 auf, die ebenfalls wenigstens eine Schicht aus einem Metallwerkstoff oder faserverstärktem Kunststoff aufweist. Zwischen den inneren Decklagen 15 und den äußeren Decklagen 13 ist jeweils eine Kernlage 16 vorgesehen, die aus einem geschäumten und/oder extrudierten Kunststoff gebildet ist. Die Seitenwände 4 sind an ihrem oberen Rand 55 jeweils mit einer Schmalseite 56 des Dachs 6 verbunden.

An ihrem unteren Rand 17 sind die Seitenwände 4 jeweils mit einer Schmalseite 18 einer Bodenstruktur 19 des Kofferaufbaus 1 verbunden. Die Bodenstruktur 19 ist im Wesentlichen durch ein Bodenpaneel 20 gebildet. Das Bodenpaneel 20 weist angrenzend an den Laderaum 14 eine Oberbodenlage 21 auf, die einen Ladeboden 22 bereitstellt, auf den die mit dem Kofferaufbau 1 zu transportierende Ladung gestellt werden kann. Die Oberbodenlage 21 ist beim dargestellten und insoweit bevorzugten Kofferaufbau 1 mehrlagig ausgebildet. Es sind eine Traglage 23 aus Holz sowie eine mit der Traglage 23 verklebte und den Ladeboden 22 bildende Metalllage 24 vorgesehen, die aus Aluminium gefertigt sein kann. Gegenüberliegend zur Oberbodenlage 21 weist das Bodenpaneel 20 eine Unterbodenlage 25 auf, die vorliegend einlagig ausgebildet ist und ebenfalls aus Metall, beispielsweise einem Stahlblech, gebildet sein kann. Die Unterbodenlage 25 schließt das Bodenpaneel 20 nach unten ab. Die Unterbodenlage 25 und die Oberbodenlage 21 sind durch eine Bodenlage 26 des Bodenpaneels 20 voneinander beabstandet. Die Bodenlage 26 des dargestellten und insoweit bevorzugten Bodenpaneels 20 weist abwechselnd Bereiche aus einem geschäumten und/oder extrudierten Kunststoff und Bereiche aus nicht dargestellten Querträgern auf, die sich wenigstens im Wesentlichen von einer Seitenwand 4 zur gegenüberliegenden Seitenwand 4 erstrecken können. Dabei dient der Kunststoff der guten thermischen Isolierung während die Querträger zur Aussteifung der Bodenstruktur 19 beitragen.

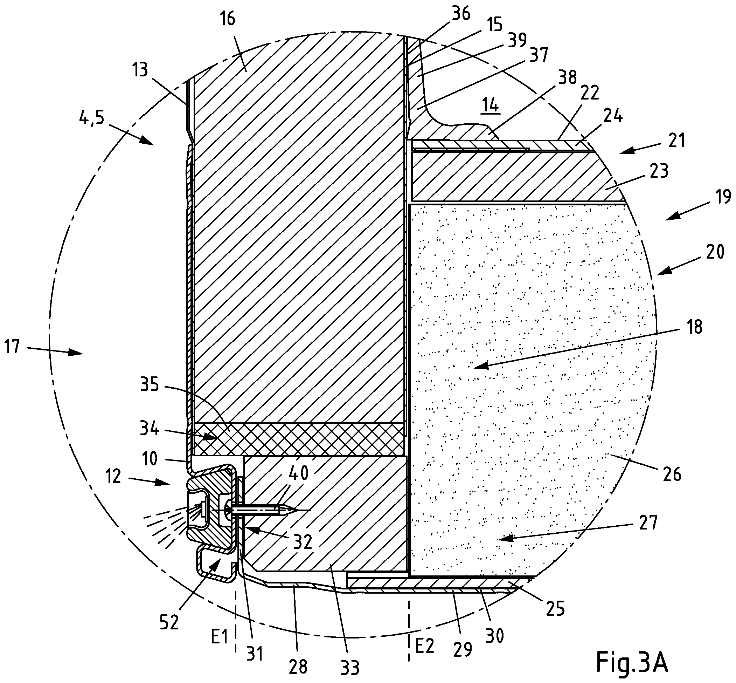

In der Fig. 3A ist ein Detail des Kofferaufbaus 1 im Verbindungsbereich der Bodenstruktur 19 mit einer Seitenwand 4 dargestellt. Die Verbindungsbereiche der Bodenstruktur 19 mit der gegenüberliegenden Seitenwand 4 und mit der Stirnwand 2 sind beim dargestellten und insoweit bevorzugten Kofferaufbau 1 analog ausgebildet. Die Bodenstruktur 19 weist am unteren Rand 27 der der Seitenwand 4 zugeordneten Schmalseite 18 ein Bodeneckprofil 28 auf, das sich entlang des unteren Rands 27 der Schmalseite 18 erstreckt. Dabei erstreckt sich das beispielsweise aus Metall, insbesondere einem Stahlblech, gebildete Bodeneckprofil 28 vorliegend wenigstens im Wesentlichen über die gesamte Länge der Seitenwand 4. Das Bodeneckprofil 28 weist einen im Wesentlichen L-förmigen Querschnitt auf. Dabei ist das Bodeneckprofil 28 mit einem langen L-Schenkel 29 mit der vorliegend durch die Unterbodenlage 25 gebildete Unterseite 30 des Bodenpaneels 20 verklebt. Mit einem kurzen L-Schenkel 31 ist das Bodeneckprofil 28 mit dem sich entlang des unteren Rands 17 der Seitenwand 4 erstreckenden Wandeckprofil 10 der Seitenwand 4 verklebt. Dabei ist die Klebeverbindung 32 zwischen dem Wandeckprofil 10 und dem Bodeneckprofil 28 in einer ersten Klebeebene E1 ausgebildet, die beim dargestellten und insoweit bevorzugten Kofferaufbau 1 wenigstens im Wesentlichen parallel zu der Seitenwand 4 angeordnet ist. Durch die Klebeverbindung 32 sind das Wandeckprofil 10 und das Bodeneckprofil 28 beim dargestellten und insoweit bevorzugten Kofferaufbau 1 wenigstens im Wesentlichen feuchtigkeitsdicht miteinander verbunden.

Das Bodeneckprofil 28 untergreift und umgreift abschnittsweise ein Montageelement 33 der Bodenstruktur 19, das vorliegend als Montageleiste 33 mit rechteckigem Querschnitt ausgebildet ist und sich wenigstens im Wesentlichen über die gesamte Länge der Seitenwand 4 erstreckt. Das Montageelement 33 ist aus Holz und/oder Kunststoff gebildet und trägt somit zur thermischen Isolierung des Laderaums 14 bei. In horizontaler Richtung erstreckt sich das Montageelement 33 von der Bodenlage 26 des Bodenpaneels 20, mit der das Montageelement 33 verklebt ist, bis wenigstens im Wesentlichen zu dem am unteren Rand 17 der Seitenwand 4 angeordneten Wandeckprofil 10. In vertikaler Richtung untergreift das Montageelement 33 abschnittsweise das Seitenwandpaneel 5 der Seitenwand 4. Dabei ist zwischen dem Montageelement 33 und dem Seitenwandpaneel 5 ein Toleranzausgleichspalt 34 gebildet. Der Toleranzausgleichsspalt 34 ist mit einem geschäumten und/oder extrudierten Kunststoff 35, beispielsweise in Form eines Klebstoffs 35, ausgefüllt. So kann ein Eintritt von Feuchtigkeit insbesondere in das Seitenwandpaneel 5 verhindert und zudem die thermische Isolation des Kofferaufbaus 1 verbessert werden. Zusätzlich stabilisieren muss der Kunststoff 35 im Toleranzausgleichsspalt 34 den Kofferaufbau 1 jedoch nicht zwingend.

Das Seitenwandpaneel 5 ist am unteren Rand mit der vorliegend durch die innere Decklage 15 gebildeten, dem Laderaum 14 zugeordneten Innenseite 36 mit der Bodenstruktur 19 verklebt. Dabei ist das Seitenwandpaneel 5 beim dargestellten und insoweit bevorzugten Kofferaufbau 1 mit dem Bodenpaneel 20 verklebt, und zwar mit der Bodenlage 26 und der Oberbodenlage 21 des Bodenpaneels 20. Zwingend erforderlich ist dies jedoch nicht. Das Seitenwandpaneel 5 ist mit der Bodenstruktur 19 in einer zweiten Klebeebene E2 verklebt, in der vorliegend auch das Montageelement 33 mit der Bodenlage 26 des Bodenpaneels 20 verklebt ist. Dabei ist die zweite Klebeebene E2 von der ersten Klebeebene E1 beabstandet angeordnet, in der das am unteren Rand 17 der Seitenwand 4 angeordnete Wandeckprofil 10 mit dem Bodeneckprofil 28 verklebt ist.

Im Eckbereich zwischen dem Seitenwandpaneel 5 und der Oberbodenlage 21 ist eine Sockelscheuerleiste 37 aus Metall, beispielsweise Aluminium, angeordnet, welche die durch das Seitenwandpaneel 5 und die Oberbodenlage 21 gebildete Ecke übergreift. Dabei steht die Sockelscheuerleiste 37 mit einem horizontalen Leistenschenkel 38 auf dem Ladeboden 22 auf und ist dort mit der den Ladeboden 22 bereitstellenden Metalllage 24 verklebt. Am freien Ende des horizontalen Leistenschenkels 38 ist die Sockelscheuerleiste 37 zudem mit der Metalllage 24 verschweißt. Ein vertikaler Leistenschenkel 39 der Sockelscheuerleiste 37 liegt an der Innenseite 36 des Seitenwandpaneels 5 an und ist dort mit dem Seitenwandpaneel 5 verklebt. Auf diese Weise werden die auf das Seitenwandpaneel 5 wirkenden Kräfte teilweise über die Sockelscheuerleiste 37 in die Bodenstruktur 19 eingeleitet.

Das am unteren Rand 17 der Seitenwand 4 angeordnete Wandeckprofil 10 und das Bodeneckprofil 28 sind zusätzlich zu der Klebeverbindung 32 über eine Mehrzahl von Verbindungsmitteln 40 kraftschlüssig miteinander verbunden. Dabei sind die Verbindungsmittel 40 vorliegend als selbstschneidende Schrauben 40 ausgebildet, die das Wandeckprofil 10 und das Bodeneckprofil 28 im Bereich der Klebeverbindung 32 durchgreifen und in das Montageelement 33 kraftschlüssig eingreifen. Die Verbindungsmittel 40 sind über die gesamte Länge des Wandeckprofils 10 und des Bodeneckprofils 28 in wenigstens im Wesentlichen regelmäßigen Abständen verteilt angeordnet.

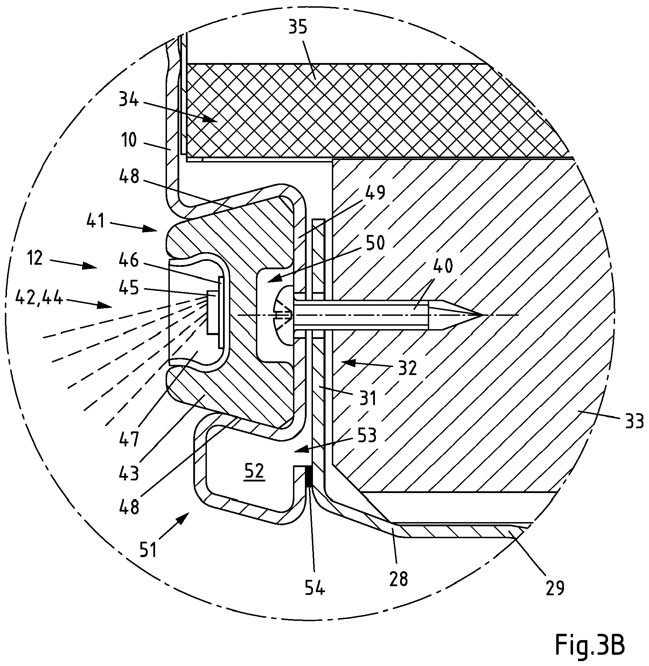

In der Fig. 3B ist ein Detail des Kofferaufbaus 1 im Verbindungsbereich des am unteren Rand 17 der Seitenwand 4 angeordneten Wandeckprofils 10 mit dem Bodeneckprofil 28 der Bodenstruktur 19 dargestellt. Die Verbindungsbereiche des am unteren Rand 17 der gegenüberliegenden Seitenwand 4 angeordneten Wandeckprofils 10 und des am unteren Rand 17 der Stirnwand 2 angeordneten Wandeckprofils 10 jeweils mit dem zugeordneten Bodeneckprofil 28 der Bodenstruktur 19 sind beim dargestellten und insoweit bevorzugten Kofferaufbau 1 analog ausgebildet. Das Wandeckprofil 10 weist eine in horizontaler Richtung nach außen, zur Umgebung des Kofferaufbaus 1 offene Montagenut 41 auf, die sich vorliegend wenigstens im Wesentlichen über die gesamte Länge des Wandeckprofils 10 erstreckt. In der sich vorliegend beidseitig verjüngenden Montagenut 41 ist das Funktionselement 12 montiert. Das dargestellte und insoweit bevorzugte Funktionselement 12 ist zweiteilig ausgebildet und weist einen Funktionsteil 42 und einen Adapterteil 43 aus Kunststoff auf. Der Funktionsteil 42 ist vorliegend durch ein sich über wenigstens im Wesentlichen die gesamte Länge der Montagenut 41 erstreckendes LED-Band 44 gebildet. Das LED-Band 44 weist eine Mehrzahl von LED-Leuchtmitteln 45 auf, die über die Länge des LED-Bands 44 verteilt angeordnet sind. Dabei sind die LED-Leuchtmittel 45 an einer flexiblen Leiterplatte 46 des LED-Bands 44 angebracht und mit der Leiterplatte 46 elektrisch verbunden, sodass die LED-Leuchtmittel 45 über die Leiterplatte 46 mit elektrischem Strom versorgt werden können. Zum Schutz der LED-Leuchtmittel 45 und der Leiterplatte 46 vor Einflüssen von außen, etwa Witterungseinflüssen, weist das LED-Band 44 ein Gehäuse 47 aus transparentem Kunststoff auf, in das die LED-Leuchtmittel 45 und die Leiterplatte 46 eingebettet sind.

Das dargestellte LED-Leuchtmittel 45 ist als Umfeldbeleuchtungsleuchtmittel 45 ausgebildet, welches weißes Licht schräg nach unten ausstrahlt und insbesondere der Ausleuchtung der Umgebung des Nutzfahrzeugs N dient. Zusätzlich zu den Umfeldbeleuchtungsleuchtmitteln 45 kann das LED-Band 44 LED-Leuchtmittel in Form von Konturmarkierungsleuchtmitteln umfassen, die gelbes, orangenes und/oder rotes Licht ausstrahlen können und insbesondere der aktiven Markierung der äußeren Kontur des Kofferaufbaus 1 dienen können. Neben den LED-Leuchtmitteln 45 kann das LED-Band 44 auch wenigstens eine Kamera zum Erfassen von Bildern der Umgebung und/oder des Nutzfahrzeugs N und/oder wenigstens einen Sensor in Form eines Abstandssensors und/oder Bewegungssensors aufweisen. Die Kamera und/oder der Sensor kann dann ebenfalls an der Leiterplatte 46 angebracht und über die Leiterplatte 46 mit elektrischen Strom versorgt werden.

Der Funktionsteil 42 des Funktionselements 12 in Form des LED-Bands 44 ist über den sich vorliegend wenigstens im Wesentlichen über die gesamte Länge der Montagenut 41 erstreckenden Adapterteil 43 des Funktionselements 12 in der Montagenut 41 gehalten. Der Adapterteil 43 ist vorliegend als Adapterprofil 43 ausgebildet, das einen etwa H-förmigen Querschnitt mit zwei seitlichen Schenkeln und einem die Schenkel verbindenden Steg aufweist. Dabei hintergreifen die Schenkel des Adapterteils 43 zwei gegenüberliegende Hinterschneidungen 48 der sich beidseitig verjüngenden Montagenut 41 und halten so das Funktionselement 12 formschlüssig in der Montagenut 41. Zudem kann der Adapterteil 43 an den Kontaktflächen in der Montagenut 41 verklebt sein. Zur Montage des Funktionselements 12 in der Montagenut 41 werden die Schenkel des leicht flexiblen Adapterteils 43 zusammengedrückt und in die Montagenut 41 eingeführt, wo die Schenkel aufgrund der Rückstellkräfte wieder in ihre ursprüngliche Form zurückkehren und so das Funktionselement 12 in der Montagenut 41 verrasten.

An der einem Nutgrund 49 der Montagenut 41 zugewandten Rückseite weist das Funktionselement 12 eine Aussparung 50 auf. In der Aussparung 50 sind die in der Montagenut 41 angeordneten Schraubenköpfe der vorliegend als Schrauben 40 ausgebildeten Verbindungsmittel 40 angeordnet. Dabei erstreckt sich die Aussparung 50 wenigstens im Wesentlichen über die gesamte Länge des Funktionselements 12. So können die Verbindungsmittel 40 flexibel in der Montagenut 41 angeordnet werden.

Das Wandeckprofil 10 weist an seinem unteren Rand einen Randabschnitt 51 auf, der einen sich über wenigstens im Wesentlichen die gesamte Länge des Wandeckprofils 10 erstreckenden Klebstoffaufnahmeraum 52 begrenzt. Der Klebstoffaufnahmeraum 52 dient der Aufnahme von überschüssigem Klebstoff der Klebeverbindung 32 zwischen dem Wandeckprofil 10 und dem Bodeneckprofil 28. Damit der überschüssige Klebstoff beim Fügen der Klebeverbindung 32 ungehindert in den Klebstoffaufnahmeraum 52 einfließen und dort austrocknen kann, weist der Klebstoffaufnahmeraum 52 eine der Klebeverbindung 32 zwischen dem Wandeckprofil 10 und dem Bodeneckprofil 28 zugewandte Aufnahmeöffnung 53 auf. Dabei erstreckt sich die Aufnahmeöffnung 53 ebenso wie die vorliegend zwischen dem Nutgrund 49 der Montagenut 41 des Wandeckprofils 10 und dem kurzen L-Schenkel 31 des Bodeneckprofils 28 ausgebildete Klebeverbindung 32 durchgängig wenigstens im Wesentlichen über die gesamte Länge der Eckprofile 10,28. Um zu verhindern, dass überschüssiger Klebstoff beim Fügen der Klebeverbindung 32 zur Unterseite des Kofferaufbaus 1 austritt, ist zwischen dem Wandeckprofil 10 und dem Bodeneckprofil 28 ein Dichtelement 54 in Form eines Dichtbands 54 vorgesehen, das sich ebenfalls wenigstens im Wesentlichen über die gesamt Länge der Eckprofile 10,28 erstreckt. Beim dargestellten und insoweit bevorzugten Ausführungsbeispiel ist das Dichtelement 54 zwischen der Aufnahmeöffnung 53 des Klebstoffaufnahmeraums 52 und einer Außenseite des Kofferaufbaus 1 angeordnet.

Um die Seitenwand 4 an der Bodenstruktur 19 zu montieren, wird die Seitenwand 4 mit der an der inneren Decklage 15 des Seitenwandpaneels 5 befestigten Sockelscheuerleiste 37 auf den Ladeboden 22 der Bodenstruktur 19 aufgesetzt. Sodann wird bei auf die Bodenstruktur 19 aufgesetzter Seitenwand 4 das an der äußeren Decklage 13 des Seitenwandpaneels 5 befestigte Wandeckprofil 10 mit dem an der Unterbodenlage 25 des Bodenpaneels 20 befestigten Bodeneckprofil 28 verklebt und zudem mittels der Verbindungsmittel 40 von einer Außenseite des Kofferaufbaus 1 kraftschlüssig verbunden. Dabei werden die als selbstschneidende Schrauben 40 ausgebildeten Verbindungsmittel 40 in das aus Holz und/oder Kunststoff gebildete Montageelement 33 eingeschraubt, was bedarfsweise einfach und schnell ohne Vorbohren des Wandeckprofils 10, des Bodeneckprofils 28 und/oder des Montageelements 33 erfolgen kann. Die Verbindungsmittel 40 fixieren das Wandeckprofil 10 und das Bodeneckprofil 28 während des Aushärtens des Klebstoffs der Klebeverbindung 32 relativ zueinander. So wird eine zuverlässige Herstellung der Klebeverbindung 32 sichergestellt. Darüber hinaus wird vorliegend bei auf die Bodenstruktur 19 aufgesetzter Seitenwand 4 die Sockelscheuerleiste 37 mit der den Ladeboden 22 bildenden Metalllage 24 der Bodenstruktur 19 verschweißt. So kann die Verbindung zwischen der Seitenwand 4 und der Bodenstruktur 19 auch von innerhalb des Laderaums 14 fixiert werden, während die Verklebungen zwischen der Seitenwand 4 und der Bodenstruktur 19 aushärten. Dabei können das Verschweißen der Sockelscheuerleiste 37 mit der Metalllage 24 und das Verschrauben des Wandeckprofils 10 mit dem Bodeneckprofil 28 zweckmäßigerweise wenigstens im Wesentlichen gleichzeitig erfolgen.

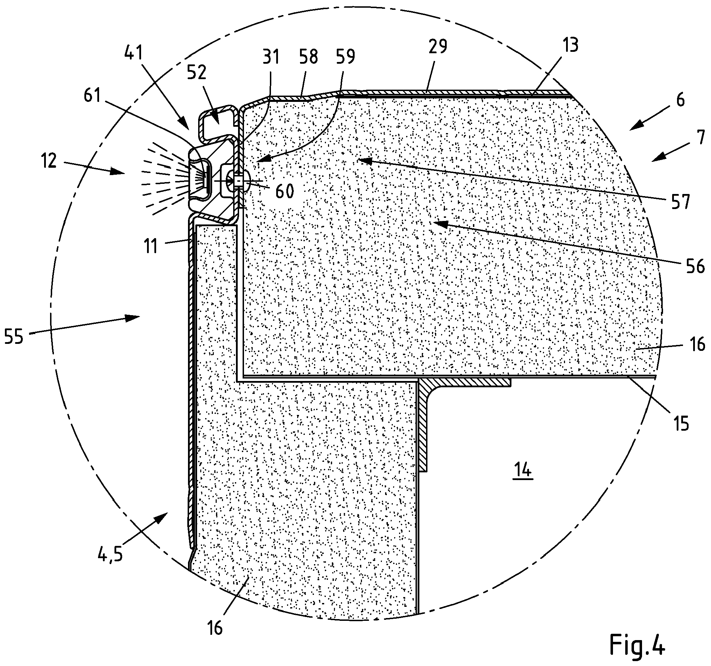

In der Fig. 4 ist ein Detail des Kofferaufbaus 1 im Verbindungsbereich des Dachs 6 mit der Seitenwand 4 dargestellt. Die Verbindungsbereiche des Dachs 6 mit der gegenüberliegenden Seitenwand 4 und mit der Stirnwand 2 sind beim dargestellten und insoweit bevorzugten Kofferaufbau 1 analog ausgebildet. Das Dach 6 weist am oberen Rand 57 der der Seitenwand 4 zugeordneten Schmalseite 56 ein Dacheckprofil 58 auf, das sich entlang des oberen Rands 57 der Schmalseite 56 erstreckt. Dabei erstreckt sich das beispielsweise aus Metall, insbesondere einem Stahlblech, gebildete Dacheckprofil 58 vorliegend wenigstens im Wesentlichen über die gesamte Länge der Seitenwand 4. Das Dacheckprofil 58 weist einen im Wesentlichen L-förmigen Querschnitt auf. Dabei ist das Dacheckprofil 58 mit einem langen L-Schenkel 29 mit der vorliegend durch die äußere Decklage 13 des Dachs 6 gebildete Oberseite des Dachpaneels 7 verklebt. Mit einem kurzen L-Schenkel 31 ist das Dacheckprofil 58 mit dem sich entlang des oberen Rands 55 der Seitenwand 4 erstreckenden Wandeckprofil 11 der Seitenwand 4 verklebt. Durch die Klebeverbindung 59 zwischen dem Wandeckprofil 11 und dem Dacheckprofil 58 sind die beiden Eckprofile 11,58 beim dargestellten und insoweit bevorzugten Kofferaufbau 1 wenigstens im Wesentlichen feuchtigkeitsdicht miteinander verbunden.

Anders als im Verbindungsbereich zwischen der Seitenwand 4 und der Bodenstruktur 19 ist im Verbindungsbereich zwischen der Seitenwand 4 und dem Dach 6 kein Montageelement 33 vorgesehen. So kann sich die Kernlage 16 des Dachpaneels 7 wenigstens im Wesentlichen bis zu dem am oberen Rand 55 der Seitenwand 4 angeordneten Wandeckprofil 11 erstrecken.

Zusätzlich zu der Klebeverbindung 59 zwischen den Eckprofilen 11,58 sind das am oberen Rand 55 der Seitenwand 4 angeordnete Wandeckprofil 11 und das Dacheckprofil 58 über eine Mehrzahl von in Längsrichtung der Eckprofile 11,58 verteilt angeordnete Verbindungsmitteln 60 kraftschlüssig miteinander verbunden. Dabei sind die Verbindungsmittel 60 vorliegend als Niete 60 ausgebildet, die das Wandeckprofil 11 und das Dacheckprofil 58 im Bereich der zwischen den Eckprofilen 11,58 vorgesehenen Klebeverbindung 59 durchgreifen.

Im dargestellten und insoweit bevorzugten Ausführungsbeispiel weist das am oberen Rand 55 der Seitenwand 4 angeordnete Wandeckprofil 11 wenigstens im Wesentlichen den gleichen Querschnitt auf wie das am unteren Rand 17 der Seitenwand 4 angeordnete Wandeckprofil 10. Dementsprechend weist auch das am oberen Rand 55 der Seitenwand 4 angeordnete Wandeckprofil 11 einen Klebstoffaufnahmeraum 52 und eine Montagenut 41 auf. Dabei dient der Klebstoffaufnahmeraum 52 zur Aufnahme von überschüssigem Klebstoff der Klebeverbindung 59 zwischen dem Wandeckprofil 11 und dem Dacheckprofil 58. In der Montagenut 41 ist das dem oberen Wandeckprofil 11 zugeordnete Funktionselement 12 gehalten, das wenigstens im Wesentlichen gleichartig zu dem zuvor beschriebenen, dem unteren Wandeckprofil 10 zugeordneten Funktionselement 12 ausgebildet ist. Dabei ist das in der Fig. 4 dargestellte LED-Leuchtmittel 61 des Funktionselements 12 als Konturmarkierungsleuchtmittel 61 ausgebildet, das gelbes, orangenes und/oder rotes Licht horizontal zu Seite ausstrahlt und insbesondere der aktiven Markierung der äußeren Kontur des Kofferaufbaus 1 dient.

### Bezugszeichenliste:

- 1: Kofferaufbau
- 2: Stirnwand
- 3: Stirnwandpaneel
- 4: Seitenwand
- 5: Seitenwandpaneel
- 6: Dach
- 7: Dachpaneel
- 8: Rückwand
- 9: Rückwandtür
- 10,11: Wandeckprofil
- 12: Funktionselement
- 13: äußere Decklage
- 14: Laderaum
- 15: innere Decklage
- 16: Kernlage
- 17: unterer Rand einer Wand
- 18: Schmalseite
- 19: Bodenstruktur
- 20: Bodenpaneel
- 21: Oberbodenlage
- 22: Ladeboden
- 23: Traglage
- 24: Metalllage
- 25: Unterbodenlage
- 26: Bodenlage
- 27: unterer Rand einer Schmalseite
- 28: Bodeneckprofil
- 29: L-Schenkel
- 30: Unterseite
- 31: L-Schenkel
- 32: Klebeverbindung
- 33: Montageelement
- 34: Toleranzausgleichsspalt
- 35: Kunststoff, Klebstoff
- 36: Innenseite
- 37: Sockelscheuerleiste
- 38,39: Leistenschenkel
- 40: Verbindungsmittel
- 41: Montagenut
- 42: Funktionsteil
- 43: Adapterteil
- 44: LED-Band
- 45: LED-Leuchtmittel
- 46: Leiterplatte
- 47: Gehäuse
- 48: Hinterschneidung
- 49: Nutgrund
- 50: Aussparung
- 51: Randabschnitt
- 52: Klebstoffaufnahmeraum
- 53: Aufnahmeöffnung
- 54: Dichtelement
- 55: oberer Rand einer Wand
- 56: Schmalseite
- 57: oberer Rand einer Schmalseite
- 58: Dacheckprofil
- 59: Klebeverbindung
- 60: Verbindungsmittel
- 61: LED-Leuchmittel

- E1,E2: Klebeebene
- N: Nutzfahrzeug
- Z: Zugmaschine

## Patentansprüche

1. Kofferaufbau (1) eines Nutzfahrzeugs (N), insbesondere Lastkraftwagen, Anhänger oder Sattelauflieger, mit wenigstens einer ein Wandpaneel (3,5) umfassenden Wand (2,4), einem ein Dachpaneel (7) umfassenden Dach (6) und einer ein Bodenpaneel (20) umfassenden Bodenstruktur (19), wobei das Wandpaneel (3,5) und das Dachpaneel (7) jeweils eine strukturgebende, einem Laderaum (14) des Kofferaufbaus (1) zugeordnete innere Decklage (15), eine strukturgebende, der Umgebung des Kofferaufbaus (1) zugeordnete äußere Decklage (13) und eine zwischen der inneren Decklage (15) und der äußeren Decklage (13) angeordnete Kernlage (16) aus Kunststoff aufweisen, wobei das Bodenpaneel (20) eine einen Ladeboden (22) bereitstellende Oberbodenlage (21), eine Unterbodenlage (25) und eine wenigstens teilweise aus Kunststoff gebildete Bodenlage (26) zwischen der Oberbodenlage (21) und der Unterbodenlage (25) aufweist, wobei die Wand (2,4) am unteren Rand (17) und/oder am oberen Rand (55) wenigstens ein sich entlang des Rands (17,55) erstreckendes Wandeckprofil (10,11) aufweist, wobei die Bodenstruktur (19) am unteren Rand (27) der der Wand (2,4) zugeordneten Schmalseite (18) wenigstens ein sich entlang des Rands (27) erstreckendes Bodeneckprofil (28) und/oder das Dach (6) am oberen Rand (57) der der Wand (2,4) zugeordneten Schmalseite (56) wenigstens ein sich entlang des Rands (57) erstreckendes Dacheckprofil (58) aufweist und wobei das wenigstens eine Wandeckprofil (10,11) mit dem Bodeneckprofil (28) oder dem Dacheckprofil (58) wenigstens spritzwasserdicht verbunden ist,
**dadurch gekennzeichnet, dass**
das wenigstens eine Wandeckprofil (10,11) mit dem Bodeneckprofil (28) oder dem Dacheckprofil (58) verklebt und zudem kraftschlüssig verbunden, insbesondere verschraubt, vernagelt, vernietet und/oder vertackert, ist.

2. Kofferaufbau nach Anspruch 1,
**dadurch gekennzeichnet, dass**
das wenigstens eine Wandeckprofil (10,11) mit dem Bodeneckprofil (28) oder dem Dacheckprofil (58) über eine Mehrzahl von entlang der Wand (2,4), insbesondere der gesamten Länge der Wand (2,4), verteilt angeordneten Verbindungsmitteln (40,60) kraftschlüssig verbunden ist und dass, vorzugsweise, die Verbindungsmittel (40,60) als Schrauben (40), insbesondere selbstschneidende Schrauben (40), Nägel, Niete (60) und/oder Klammern, insbesondere Tackerklammern, ausgebildet sind und/oder die Verbindungsmittel (40,60) das Wandeckprofil (10,11) und/oder das Bodeneckprofil (28) oder Dacheckprofil (58) durchgreifen.

3. Kofferaufbau nach Anspruch 2,
**dadurch gekennzeichnet, dass**
die Verbindungsmittel (40,60) kraftschlüssig in wenigstens ein sich entlang der Wand (2,4), insbesondere der gesamten Länge der Wand (2,4), erstreckendes Montageelement (33), insbesondere der Bodenstruktur (19) oder des Dachs (6), eingreifen und dass, vorzugsweise, das wenigstens eine Montageelement (33) als Montageleiste (33) ausgebildet ist und/oder einen wenigstens im Wesentlichen rechteckigen Querschnitt quer zur Wand (2,4) aufweist und/oder wenigstens im Wesentlichen aus Holz und/oder Kunststoff gebildet ist.

4. Kofferaufbau nach Anspruch 3,
**dadurch gekennzeichnet, dass**
das wenigstens eine Montageelement (33) das Wandpaneel (3,5) wenigstens abschnittsweise untergreift oder übergreift, dass, vorzugsweise, zwischen dem Wandpaneel (3,5) und dem wenigstens einen Montageelement (33) ein Toleranzausgleichsspalt (34) vorgesehen ist und dass, weiter vorzugsweise, der wenigstens eine Toleranzausgleichsspalt (34) mit, insbesondere geschäumtem und/oder extrudiertem, Klebstoff (35) und/oder, insbesondere geschäumtem und/oder extrudiertem, Kunststoff (35) ausgefüllt ist.

5. Kofferaufbau nach Anspruch 3 oder 4,
**dadurch gekennzeichnet, dass**
das wenigstens eine Montageelement (33) gegenüber der, insbesondere übrigen, Bodenstruktur (19) und/oder gegenüber dem, insbesondere übrigen, Dach (6) in Richtung der Wand (2,4) vorsteht und/oder dass sich das wenigstens eine Montageelement (33) wenigstens im Wesentlichen von dem Bodenpaneel (20), insbesondere der Bodenlage (26) des Bodenpaneels (20), oder dem Dachpaneel (7), insbesondere der Kernlage (16) des Dachpaneels (7), bis wenigstens im Wesentlichen zum Wandeckprofil (10,11) erstreckt und/oder dass das wenigstens eine Montageelement (33) mit dem Bodenpaneel (20), insbesondere der Bodenlage (26) des Bodenpaneels (20), oder dem Dachpaneel (7), insbesondere der Kernlage (16) des Dachpaneels (7), verbunden, insbesondere verklebt und/oder verschraubt, ist.

6. Kofferaufbau nach einem der Ansprüche 3 bis 5,
**dadurch gekennzeichnet, dass**
das Bodeneckprofil (28) und/oder das Dacheckprofil (58) das Montageelement (33), insbesondere wenigstens im Wesentlichen über die gesamte Länge des Montageelements (33), wenigstens abschnittsweise untergreift oder übergreift, insbesondere wenigstens abschnittsweise umgreift.

7. Kofferaufbau nach einem der Ansprüche 1 bis 6,
**dadurch gekennzeichnet, dass**
das wenigstens eine Wandeckprofil (10,11) wenigstens eine sich in Längsrichtung des Wandeckprofils (10,11) erstreckende Montagenut (41) zur Montage wenigstens eines Funktionselement (12) von einer Außenseite des Kofferaufbaus (1) an dem Wandeckprofil (10,11) aufweist und dass, vorzugsweise, wenigstens ein Nutgrund (49) der wenigstens einen Montagenut (41) mit dem Bodeneckprofil (28) oder dem Dacheckprofil (58) verklebt ist und/oder die Verbindungsmittel (40,60) einen Nutgrund (49) der Montagenut (41) durchgreifen.

8. Kofferaufbau nach Anspruch 7,
**dadurch gekennzeichnet, dass**
wenigstens ein Funktionselement (12) in der wenigstens einen Montagenut (41) gehalten ist und dass, vorzugsweise, das wenigstens eine Funktionselement (12), insbesondere an der einem Nutgrund (49) der Montagenut (41) zugewandten Rückseite, wenigstens eine Aussparung (50) für den in der Montagenut (41) angeordneten Abschnitt wenigstens eines der Verbindungsmittel (40,60) aufweist und/oder das wenigstens eine Funktionselement (12) den in der Montagenut (41) angeordneten Abschnitt wenigstens eines der Verbindungsmittel (40,60) überdeckt.

9. Kofferaufbau nach einem der Ansprüche 1 bis 8,
**dadurch gekennzeichnet, dass**
das Wandeckprofil (10,11), das Bodeneckprofil (28) und/oder das Dacheckprofil (58) wenigstens einen, insbesondere sich in Längsrichtung des Eckprofils (10,11,28,58) erstreckenden, Klebstoffaufnahmeraum (52) zur Aufnahme von überschüssigem Klebstoff der Klebeverbindung (32,59) zwischen den Eckprofilen wenigstens abschnittsweise, insbesondere wenigstens im Wesentlichen, begrenzt und dass, vorzugsweise, der wenigstens eine Klebstoffaufnahmeraum (52) wenigstens eine, insbesondere sich in Längsrichtung des Eckprofils (10,11,28,58) erstreckende und/oder der Klebeverbindung (32,59) zwischen den Eckprofilen (10,11,28,58) zugewandte, Aufnahmeöffnung (53) zum Einfließen von überschüssigem Klebstoff in den Klebstoffaufnahmeraum (52) aufweist.

10. Kofferaufbau nach einem der Ansprüche 1 bis 9,
**dadurch gekennzeichnet, dass**
zwischen dem wenigstens einen Wandeckprofil (10,11) und dem Bodeneckprofil (28) oder Dacheckprofil (58) wenigstens ein Dichtelement (54), insbesondere Dichtband (54), zur Vermeidung eines Austritts von überschüssigem Klebstoff der Klebeverbindung (32,59) zwischen den Eckprofilen (10,11,28,58) zu einer Außenseite des Kofferaufbaus (1) vorgesehen ist und dass, vorzugsweise, die wenigstens eine Aufnahmeöffnung (53) des wenigstens einen Klebstoffaufnahmeraums (52) zwischen dem Dichtelement (54) und der Klebeverbindung (32,59) zwischen den Eckprofilen (10,11,28,58) angeordnet ist.

11. Kofferaufbau nach einem der Ansprüche 1 bis 10,
**dadurch gekennzeichnet, dass**
die dem Laderaum (14) zugeordnete Innenseite (36) des Wandpaneels (3,5), insbesondere der inneren Decklage (15) des Wandpaneels (3,5), mit der Bodenstruktur (19) verklebt ist und dass, vorzugsweise, die Innenseite (36) des Wandpaneels (3,5) mit der Bodenstruktur (19) einerseits und das Wandeckprofil (10,11) mit dem Bodeneckprofil (28) andererseits in voneinander beabstandeten Klebeebenen (E1,E2) verklebt sind.

12. Kofferaufbau nach einem der Ansprüche 1 bis 11,
**dadurch gekennzeichnet, dass**
das wenigstens eine Wandeckprofil (10,11) mit der der Umgebung des Kofferaufbaus (1) zugeordneten Außenseite des Wandpaneels (3,5), das Bodeneckprofil (28) mit der der Umgebung des Kofferaufbaus (1) zugeordneten Unterseite (30) des Bodenpaneels (20) und/oder das Dacheckprofil (58) mit der der Umgebung des Kofferaufbaus (1) zugeordneten Oberseite des Dachpaneels (7) verbunden, insbesondere verklebt und/oder verschraubt, ist und/oder dass das wenigstens eine Wandeckprofil (10,11), das Bodeneckprofil (28) und/oder das Dacheckprofil (58) wenigstens im Wesentlichen aus Metall, insbesondere Stahlblech, und/oder faserverstärktem Kunststoff gebildet ist.

13. Kofferaufbau nach einem der Ansprüche 1 bis 12,
**dadurch gekennzeichnet, dass**
das Bodeneckprofil (28) und/oder das Dacheckprofil (58) einen wenigstens im Wesentlichen L-förmigen Querschnitt quer zur Wand (2,4) aufweist und dass, vorzugsweise, ein, insbesondere kurzer, L-Schenkel (29,31) des Bodeneckprofils (28) und/oder des Dacheckprofils (58) dem Wandeckprofil (10,11) und/oder ein, insbesondere langer, L-Schenkel (29,31) des Bodeneckprofils (28) dem Bodenpaneel (20) und/oder ein, insbesondere langer, L-Schenkel (29,31) des Dacheckprofils (58) dem Dachpaneel (7) zugeordnet ist.

14. Verfahren zur Herstellung eines Kofferaufbaus (1) nach einem der Ansprüche 1 bis 13,
- bei dem das wenigstens eine Wandeckprofil (10,11) mit dem Bodeneckprofil (28) oder dem Dacheckprofil (58) verklebt und zudem kraftschlüssig verbunden, insbesondere verschraubt, vernagelt, vernietet und/oder vertackert, wird und
- bei dem das Aushärten des Klebstoffs der wenigstens einen Klebeverbindung (32,59) zwischen den Eckprofilen (10,11,28,58) wenigstens teilweise bei gefügter kraftschlüssiger Verbindung zwischen den zu verklebenden Eckprofilen (10,11,28,58) erfolgt.

15. Verfahren nach Anspruch 14,
- bei dem das wenigstens eine mit dem Wandpaneel (3,5) verbundene oder durch das Wandpaneel (3,5) gebildete Wandeckprofil (10,11) mit dem mit dem Bodenpaneel (20) verbundenen oder durch das Bodenpaneel (20) gebildeten Bodeneckprofil (28) oder mit dem mit dem Dachpaneel (7) verbundenen oder durch das Dachpaneel (7) gebildeten Dacheckprofil (58) verklebt und kraftschlüssig verbunden wird und/oder
- bei dem die Wand (2,4), insbesondere mit einer Sockelscheuerleiste (37) der Wand (2,4), auf die Bodenstruktur (19), insbesondere den Ladeboden (22), aufgesetzt wird und das Wandeckprofil (10,11) bei auf die Bodenstruktur (19) aufgesetzter Wand (2,4) mit dem Bodeneckprofil (28) verklebt und kraftschlüssig verbunden wird.

## Geänderte Patentansprüche

### Geänderte Patentansprüche gemäss Regel 137(2) EPÜ.

1. Kofferaufbau (1) eines Nutzfahrzeugs (N), insbesondere Lastkraftwagen, Anhänger oder Sattelauflieger, mit wenigstens einer ein Wandpaneel (3,5) umfassenden Wand (2,4), einem ein Dachpaneel (7) umfassenden Dach (6) und einer ein Bodenpaneel (20) umfassenden Bodenstruktur (19), wobei das Wandpaneel (3,5) und das Dachpaneel (7) jeweils eine strukturgebende, einem Laderaum (14) des Kofferaufbaus (1) zugeordnete innere Decklage (15), eine strukturgebende, der Umgebung des Kofferaufbaus (1) zugeordnete äußere Decklage (13) und eine zwischen der inneren Decklage (15) und der äußeren Decklage (13) angeordnete Kernlage (16) aus Kunststoff aufweisen, wobei das Bodenpaneel (20) eine einen Ladeboden (22) bereitstellende Oberbodenlage (21), eine Unterbodenlage (25) und eine wenigstens teilweise aus Kunststoff gebildete Bodenlage (26) zwischen der Oberbodenlage (21) und der Unterbodenlage (25) aufweist, wobei die Wand (2,4) am unteren Rand (17) und/oder am oberen Rand (55) wenigstens ein sich entlang des Rands (17,55) erstreckendes Wandeckprofil (10,11) aufweist, wobei die Bodenstruktur (19) am unteren Rand (27) der der Wand (2,4) zugeordneten Schmalseite (18) wenigstens ein sich entlang des Rands (27) erstreckendes Bodeneckprofil (28) und/oder das Dach (6) am oberen Rand (57) der der Wand (2,4) zugeordneten Schmalseite (56) wenigstens ein sich entlang des Rands (57) erstreckendes Dacheckprofil (58) aufweist, wobei das wenigstens eine Wandeckprofil (10,11) mit dem Bodeneckprofil (28) oder dem Dacheckprofil (58) wenigstens spritzwasserdicht verbunden ist und wobei das wenigstens eine Wandeckprofil (10,11) mit dem Bodeneckprofil (28) oder dem Dacheckprofil (58) verklebt und zudem kraftschlüssig verbunden, insbesondere verschraubt, vernagelt, vernietet und/oder vertackert, ist,
**dadurch gekennzeichnet, dass**
das wenigstens eine Wandeckprofil (10,11) mit dem Bodeneckprofil (28) oder dem Dacheckprofil (58) über eine Mehrzahl von entlang der Wand (2,4) verteilt angeordneten Verbindungsmitteln (40,60) kraftschlüssig verbunden ist.

2. Kofferaufbau nach Anspruch 1,
**dadurch gekennzeichnet, dass** die Verbindungsmittel (40,60) entlang der gesamten Länge der Wand (2,4) verteilt angeordnet sind und/oder dass die Verbindungsmittel (40,60) als Schrauben (40), insbesondere selbstschneidende Schrauben (40), Nägel, Niete (60) und/oder Klammern, insbesondere Tackerklammern, ausgebildet sind und/oder dass die Verbindungsmittel (40,60) das Wandeckprofil (10,11) und/oder das Bodeneckprofil (28) oder Dacheckprofil (58) durchgreifen.

3. Kofferaufbau nach Anspruch 1 oder 2,
**dadurch gekennzeichnet, dass** die Verbindungsmittel (40,60) kraftschlüssig in wenigstens ein sich entlang der Wand (2,4), insbesondere der gesamten Länge der Wand (2,4), erstreckendes Montageelement (33), insbesondere der Bodenstruktur (19) oder des Dachs (6), eingreifen und dass, vorzugsweise, das wenigstens eine Montageelement (33) als Montageleiste (33) ausgebildet ist und/oder einen wenigstens im Wesentlichen rechteckigen Querschnitt quer zur Wand (2,4) aufweist und/oder wenigstens im Wesentlichen aus Holz und/oder Kunststoff gebildet ist.

4. Kofferaufbau nach Anspruch 3,
**dadurch gekennzeichnet, dass** das wenigstens eine Montageelement (33) das Wandpaneel (3,5) wenigstens abschnittsweise untergreift oder übergreift, dass, vorzugsweise, zwischen dem Wandpaneel (3,5) und dem wenigstens einen Montageelement (33) ein Toleranzausgleichsspalt (34) vorgesehen ist und dass, weiter vorzugsweise, der wenigstens eine Toleranzausgleichsspalt (34) mit, insbesondere geschäumtem und/oder extrudiertem, Klebstoff (35) und/oder, insbesondere geschäumtem und/oder extrudiertem, Kunststoff (35) ausgefüllt ist.

5. Kofferaufbau nach Anspruch 3 oder 4,
**dadurch gekennzeichnet, dass** das wenigstens eine Montageelement (33) gegenüber der, insbesondere übrigen, Bodenstruktur (19) und/oder gegenüber dem, insbesondere übrigen, Dach (6) in Richtung der Wand (2,4) vorsteht und/oder dass sich das wenigstens eine Montageelement (33) wenigstens im Wesentlichen von dem Bodenpaneel (20), insbesondere der Bodenlage (26) des Bodenpaneels (20), oder dem Dachpaneel (7), insbesondere der Kernlage (16) des Dachpaneels (7), bis wenigstens im Wesentlichen zum Wandeckprofil (10,11) erstreckt und/oder dass das wenigstens eine Montageelement (33) mit dem Bodenpaneel (20), insbesondere der Bodenlage (26) des Bodenpaneels (20), oder dem Dachpaneel (7), insbesondere der Kernlage (16) des Dachpaneels (7), verbunden, insbesondere verklebt und/oder verschraubt, ist.

6. Kofferaufbau nach einem der Ansprüche 3 bis 5,
**dadurch gekennzeichnet, dass** das Bodeneckprofil (28) und/oder das Dacheckprofil (58) das Montageelement (33), insbesondere wenigstens im Wesentlichen über die gesamte Länge des Montageelements (33), wenigstens abschnittsweise untergreift oder übergreift, insbesondere wenigstens abschnittsweise umgreift.

7. Kofferaufbau nach einem der Ansprüche 1 bis 6,
**dadurch gekennzeichnet, dass** das wenigstens eine Wandeckprofil (10,11) wenigstens eine sich in Längsrichtung des Wandeckprofils (10,11) erstreckende Montagenut (41) zur Montage wenigstens eines Funktionselement (12) von einer Außenseite des Kofferaufbaus (1) an dem Wandeckprofil (10,11) aufweist und dass, vorzugsweise, wenigstens ein Nutgrund (49) der wenigstens einen Montagenut (41) mit dem Bodeneckprofil (28) oder dem Dacheckprofil (58) verklebt ist und/oder die Verbindungsmittel (40,60) einen Nutgrund (49) der Montagenut (41) durchgreifen.

8. Kofferaufbau nach Anspruch 7,
**dadurch gekennzeichnet, dass** wenigstens ein Funktionselement (12) in der wenigstens einen Montagenut (41) gehalten ist und dass, vorzugsweise, das wenigstens eine Funktionselement (12), insbesondere an der einem Nutgrund (49) der Montagenut (41) zugewandten Rückseite, wenigstens eine Aussparung (50) für den in der Montagenut (41) angeordneten Abschnitt wenigstens eines der Verbindungsmittel (40,60) aufweist und/oder das wenigstens eine Funktionselement (12) den in der Montagenut (41) angeordneten Abschnitt wenigstens eines der Verbindungsmittel (40,60) überdeckt.

9. Kofferaufbau nach einem der Ansprüche 1 bis 8,
**dadurch gekennzeichnet, dass** das Wandeckprofil (10,11), das Bodeneckprofil (28) und/oder das Dacheckprofil (58) wenigstens einen, insbesondere sich in Längsrichtung des Eckprofils (10,11,28,58) erstreckenden, Klebstoffaufnahmeraum (52) zur Aufnahme von überschüssigem Klebstoff der Klebeverbindung (32,59) zwischen den Eckprofilen wenigstens abschnittsweise, insbesondere wenigstens im Wesentlichen, begrenzt und dass, vorzugsweise, der wenigstens eine Klebstoffaufnahmeraum (52) wenigstens eine, insbesondere sich in Längsrichtung des Eckprofils (10,11,28,58) erstreckende und/oder der Klebeverbindung (32,59) zwischen den Eckprofilen (10,11,28,58) zugewandte, Aufnahmeöffnung (53) zum Einfließen von überschüssigem Klebstoff in den Klebstoffaufnahmeraum (52) aufweist.

10. Kofferaufbau nach einem der Ansprüche 1 bis 9,
**dadurch gekennzeichnet, dass** zwischen dem wenigstens einen Wandeckprofil (10,11) und dem Bodeneckprofil (28) oder Dacheckprofil (58) wenigstens ein Dichtelement (54), insbesondere Dichtband (54), zur Vermeidung eines Austritts von überschüssigem Klebstoff der Klebeverbindung (32,59) zwischen den Eckprofilen (10,11,28,58) zu einer Außenseite des Kofferaufbaus (1) vorgesehen ist und dass, vorzugsweise, die wenigstens eine Aufnahmeöffnung (53) des wenigstens einen Klebstoffaufnahmeraums (52) zwischen dem Dichtelement (54) und der Klebeverbindung (32,59) zwischen den Eckprofilen (10,11,28,58) angeordnet ist.

11. Kofferaufbau nach einem der Ansprüche 1 bis 10,
**dadurch gekennzeichnet, dass** die dem Laderaum (14) zugeordnete Innenseite (36) des Wandpaneels (3,5), insbesondere der inneren Decklage (15) des Wandpaneels (3,5), mit der Bodenstruktur (19) verklebt ist und dass, vorzugsweise, die Innenseite (36) des Wandpaneels (3,5) mit der Bodenstruktur (19) einerseits und das Wandeckprofil (10,11) mit dem Bodeneckprofil (28) andererseits in voneinander beabstandeten Klebeebenen (E1,E2) verklebt sind.

12. Kofferaufbau nach einem der Ansprüche 1 bis 11,
**dadurch gekennzeichnet, dass** das wenigstens eine Wandeckprofil (10,11) mit der der Umgebung des Kofferaufbaus (1) zugeordneten Außenseite des Wandpaneels (3,5), das Bodeneckprofil (28) mit der der Umgebung des Kofferaufbaus (1) zugeordneten Unterseite (30) des Bodenpaneels (20) und/oder das Dacheckprofil (58) mit der der Umgebung des Kofferaufbaus (1) zugeordneten Oberseite des Dachpaneels (7) verbunden, insbesondere verklebt und/oder verschraubt, ist und/oder dass das wenigstens eine Wandeckprofil (10,11), das Bodeneckprofil (28) und/oder das Dacheckprofil (58) wenigstens im Wesentlichen aus Metall, insbesondere Stahlblech, und/oder faserverstärktem Kunststoff gebildet ist.

13. Kofferaufbau nach einem der Ansprüche 1 bis 12,
**dadurch gekennzeichnet, dass**
das Bodeneckprofil (28) und/oder das Dacheckprofil (58) einen wenigstens im Wesentlichen L-förmigen Querschnitt quer zur Wand (2,4) aufweist und dass, vorzugsweise, ein, insbesondere kurzer, L-Schenkel (29,31) des Bodeneckprofils (28) und/oder des Dacheckprofils (58) dem Wandeckprofil (10,11) und/oder ein, insbesondere langer, L-Schenkel (29,31) des Bodeneckprofils (28) dem Bodenpaneel (20) und/oder ein, insbesondere langer, L-Schenkel (29,31) des Dacheckprofils (58) dem Dachpaneel (7) zugeordnet ist.

14. Verfahren zur Herstellung eines Kofferaufbaus (1) nach einem der Ansprüche 1 bis 13,
- bei dem das wenigstens eine Wandeckprofil (10,11) mit dem Bodeneckprofil (28) oder dem Dacheckprofil (58) verklebt und zudem kraftschlüssig verbunden, insbesondere verschraubt, vernagelt, vernietet und/oder vertackert, wird und
- bei dem das Aushärten des Klebstoffs der wenigstens einen Klebeverbindung (32,59) zwischen den Eckprofilen (10,11,28,58) wenigstens teilweise bei gefügter kraftschlüssiger Verbindung zwischen den zu verklebenden Eckprofilen (10,11,28,58) erfolgt.

15. Verfahren nach Anspruch 14,
- bei dem das wenigstens eine mit dem Wandpaneel (3,5) verbundene oder durch das Wandpaneel (3,5) gebildete Wandeckprofil (10,11) mit dem mit dem Bodenpaneel (20) verbundenen oder durch das Bodenpaneel (20) gebildeten Bodeneckprofil (28) oder mit dem mit dem Dachpaneel (7) verbundenen oder durch das Dachpaneel (7) gebildeten Dacheckprofil (58) verklebt und kraftschlüssig verbunden wird und/oder
- bei dem die Wand (2,4), insbesondere mit einer Sockelscheuerleiste (37) der Wand (2,4), auf die Bodenstruktur (19), insbesondere den Ladeboden (22), aufgesetzt wird und das Wandeckprofil (10,11) bei auf die Bodenstruktur (19) aufgesetzter Wand (2,4) mit dem Bodeneckprofil (28) verklebt und kraftschlüssig verbunden wird.
